(19) Europäisches Patentamt / European Patent Office / Office européen des brevets

(11) **EP 4 233 354 B1**

(12) **EUROPEAN PATENT SPECIFICATION**

(45) Date of publication and mention
of the grant of the patent:
**19.02.2025 Bulletin 2025/08**

(21) Application number: **21801226.8**

(22) Date of filing: **22.10.2021**

(51) International Patent Classification (IPC):
**H04W 24/10** $^{(2009.01)}$   **H04W 52/02** $^{(2009.01)}$

(52) Cooperative Patent Classification (CPC):
**H04W 24/10; H04W 52/02; Y02D 30/70**

(86) International application number:
**PCT/IB2021/059767**

(87) International publication number:
**WO 2022/084942 (28.04.2022 Gazette 2022/17)**

(54) **METHODS AND SYSTEMS FOR RRM MEASUREMENT RELAXATION FOR STATIONARY-MOBILITY DEVICES**

VERFAHREN UND SYSTEME ZUR RRM-MESSRELAXATION FÜR STATIONÄRE MOBILITÄTSVORRICHTUNGEN

PROCÉDÉS ET SYSTÈMES PERMETTANT LA RELAXATION DE LA MESURE RRM POUR DES DISPOSITIFS MOBILES STATIONNAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 US 202063104083 P**

(43) Date of publication of application:
**30.08.2023 Bulletin 2023/35**

(73) Proprietor: **Telefonaktiebolaget LM Ericsson (publ)**
**164 83 Stockholm (SE)**

(72) Inventors:
• **CHEN, Yi-Ju**
  **169 74 Solna (SE)**
• **WÄNSTEDT, Stefan**
  **972 51 Luleå (SE)**
• **TIRRONEN, Tuomas**
  **00950 Helsinki (FI)**

• **HÖGLUND, Andreas**
  **170 62 Solna (SE)**

(74) Representative: **Ericsson**
**Patent Development**
**Torshamnsgatan 21-23**
**164 80 Stockholm (SE)**

(56) References cited:
WO-A1-2020/018347     WO-A1-2020/089513
WO-A1-2020/164903     US-A1- 2019 254 110

• ERICSSON (EMAIL RAPPORTEUR): "[98#52][NB-IoT] Power Consumption for RRM", vol. RAN WG2, no. Berlin, Germany; 20170821 - 20170825, 20 August 2017 (2017-08-20), XP051318174, Retrieved from the Internet <URL:http://www.3gpp. org/ftp/Meetings_3GPP_SYNC/RAN2/Docs/> [retrieved on 20170820]

**Description**

FIELD

The present disclosure relates generally to communication systems and, more specifically, to radio resource management relaxation for stationary-mobility devices.

BACKGROUND

New radio (NR) was introduced in the 3rd generation partnership project (3GPP) specifications to provide enhanced mobile broadband (eMBB) and critical machine type communication (CMTC) services. An example of a CMTC service is ultra-reliable and low latency communication (URLLC). These services are mainly targeted for high data rate, high reliability, or low latency scenarios. Therefore, these services may require high user equipment (UE) performance and may lead to high design cost and complexity of the UE and network equipment. Furthermore, the dimensions of the UE may also be required to be small, which makes it more difficult for devices providing eMBB and CMTC services to have long battery life.

To allow NR to be used by UEs with a longer battery life, the 3GPP release 17 introduced a reduced capability (RedCap) UE. A RedCap UE can be used for machine type communications (MTC) and/or mobile broadband (MBB) services with low performance requirements but longer battery lifetime expectancy (e.g., a few days). Such RedCap UEs may include wireless sensors, video surveillance cameras, wearable devices, or the like. A RedCap UE may spend a large amount of time (e.g., more than 90%) in an idle or inactive state (e.g., RRC_IDLE or RRC_INACTIVE states). In an RRC_IDLE state, a UE is switched on but does not have any established radio resource control (RRC) connection. In an RRC_INACTIVE state, a UE and a network node (e.g., gNB node) save radio and security configurations, which can be used quickly to restore connection between the UE and the network node. The RRC_INACTIVE state is particular useful for machine type communications (MTC) and Internet of Things (IoT) applications, where small amounts of data are communicated.

Radio resource management (RRM) is one of the main factors that affect a significant portion of energy consumption in a UE. RRM measurements are performed by a UE while the UE is in an idle or inactive state. The RRM measurements are performed according to current measurement criteria and rules for cell selection or re-selection. These current measurement criteria and rules are defined in 3GPP TS 38.304 specification. The 3GPP TS 38.304 specification defines the UE mobility states as including a normal-mobility state, a medium-mobility state, and a high-mobility state. The current measurement criteria and rules further include relaxed measurement criteria and rules for UEs having a low mobility.

The document US 2019 254110 A1 discloses mechanisms for enabling reduced power consumption at a user equipment in wireless communication systems. More specifically, this disclosure relates to enabling power savings for a user equipment in new radio systems.

The document WO 2020/018347 A1 relates to wireless communication and to techniques and apparatuses for radio resource management for paging in a non-anchor carrier. Some techniques and apparatuses described enable and provide wireless communication devices and systems configured for conserved device power and increased reliability.

The document WO 2020 089513 A1 relates to user equipment power saving due to relaxed RRM measurement periods and, more specifically, relates to further energy saving by adapting RRM measurements when the mobility state of user equipment can be estimated or considered as low or stationary.

The 3GPP document ERICSSON (EMAIL RAPPORTEUR); "[98#52][NB-IOT] Power Consumption for RRM", 3GPP DRAFT, R2-1708277, relates to continued discussion, with the goal to find solutions (simple) to reduce power consumption for detection and measurements of neighbor cells.

The document WO 2020 164903 A1 relates to a method of operating a communications device for communicating data via a wireless communications network comprising detecting one or more of a plurality of beams of radio signals transmitted by the wireless communications network.

The current measurement criteria and rules, however, may not be suitable or sufficient for a UE that is mostly stationary. Such a UE may remain in the same physical location for a very long period of time (e.g., a few hours or days) or may not move at all. For example, a surveillance camera typically remains in a fixed physical location after installation. So does a wireless sensor installed in an infrastructures or facilities (e.g., a roadside sensor, a parking lot sensor, a sensor mounted with a traffic light). For these types of UEs, current relaxed measurements may still impose requirements that are unnecessary, which may result in a waste of energy and/or inefficient using of network resources (e.g., occupying radio resources, increased network traffic, or the like). Furthermore, RedCap UEs may have fewer antennas and other reduced capabilities than an eMBB UE. By using the current measurement criteria and rules intended for eMBB UEs or other devices having greater capabilities, it may become problematic for RedCap UEs to meet the current measurement criteria and rules. Therefore, there is a need for additional RRM measurement criteria and rules.

SUMMARY

Various computer-implemented systems, methods, and articles of manufacture for relaxing radio resource management (RRM) measurements are described herein.

In one embodiment, a method performed by a user equipment (UE) for relaxing Radio Resource Management (RRM) measurement is provided. The method comprises obtaining an indication for use in determining a stationary-mobility state of the UE. The indication comprises one or more first criteria, which is based on a difference between a current signal level value and a reference signal value as compared to an adjusted threshold. The method further comprises determining whether a mobility state of the UE corresponds to the stationary-mobility state based on the indication. The UE in the stationary-mobility state has a lower mobility than the UE in a low-mobility state. In accordance with a determination that the mobility state of the UE corresponds to a stationary-mobility state, the method further comprises adjusting one or more measurements according to measurement rules associated with the stationary-mobility state. The adjustments reduce the amount of energy consumed when performing RRM measurement. The method further comprises performing at least one RRM measurement based on the adjustments.

In one embodiment, a method performed by a network node for relaxing Radio Resource Management (RRM) measurements is provided. The method comprises providing a user equipment (UE) with an indication for use in determining a stationary-mobility state of the UE, the indication comprising one or more first criteria. The first criteria is based on a difference between a current signal level value and a reference signal value as compared to an adjusted threshold. The UE in a stationary-mobility state has a lower mobility than the UE in a low-mobility state. The method further comprises receiving a measurement report based on adjusted measurements according to one or more measurement rules associated with the stationary-mobility state.

In one embodiment, a method performed by a wireless communication system is provided. The system comprises a network node and a user equipment (UE). The user equipment is served by a serving cell of the network node. The method comprises providing, from the network node to the UE, an indication for use in determining a stationary-mobility state of the UE. The indication comprises one or more first criteria, wherein the first criteria is based on a difference between a current signal level value and a reference signal value as compared to an adjusted threshold. The method further comprises determining, by the UE based on the indication, whether a mobility state of the UE corresponds to the stationary-mobility state. The UE in the stationary-mobility state has a lower mobility than the UE in a low-mobility state. In accordance with a determination that the mobility state of the UE corresponds to a stationary-mobility state, the method further comprises adjusting one or more measurements by the UE according to measurement rules associated with the stationary-mobility state. The adjustments reduce the amount of energy consumed when performing RRM measurement. The method further comprises performing at least one RRM measurement by the UE based on the adjustments and receiving, by the network node, a measurement report based on adjusted measurements according to one or more measurement rules associated with the stationary-mobility state.

Embodiments of a UE, a network node, and a wireless communication system are also provided according to the above method embodiments.

BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.

Figure 1 illustrates an exemplary wireless network in accordance with some embodiments.

Figure 2 illustrates an exemplary user equipment in accordance with some embodiments.

Figure 3 illustrates an exemplary virtualization environment in accordance with some embodiments.

Figure 4 illustrates an exemplary telecommunication network connected via an intermediate network to a host computer in accordance with some embodiments.

Figure 5 illustrates an exemplary host computer communicating via a base station with a user equipment over a partially wireless connection in accordance with some embodiments.

Figure 6 illustrates an exemplary method implemented in a communication system including a host computer, a base station, and a user equipment in accordance with some embodiments.

Figure 7 illustrates an exemplary method implemented in a communication system including a host computer, a base station, and a user equipment in accordance with some embodiments.

Figure 8 illustrates an exemplary method implemented in a communication system including a host computer, a base station, and a user equipment in accordance with some embodiments.

Figure 9 illustrates an exemplary method implemented in a communication system including a host computer, a base station, and a user equipment in accordance with some embodiments.

Figure 10 illustrates an exemplary wireless network in accordance with some embodiments.

Figure 11 illustrates an exemplary network node capable of communicating with two user equipment.

Figure 12 is an exemplary flowchart illustrating a method for relaxing RRM measurements.

Figure 13 is a block diagram illustrating examples of criteria used for relaxing RRM measurements.

Figure 14 illustrates exemplary cells including a serving cell and multiple neighboring cells.

DETAILED DESCRIPTION

To provide a more thorough understanding of the present invention, the following description sets forth numerous specific details, such as specific configurations, parameters, examples, and the like. It should be recognized, however, that such description is not intended as a limitation on the scope of the present invention but is intended to provide a better description of the exemplary embodiments.

Throughout the specification and claims, the following terms take the meanings explicitly associated herein, unless the context clearly dictates otherwise:

The phrase "in one embodiment" as used herein does not necessarily refer to the same embodiment, though it may. Thus, as described below, various embodiments of the invention may be readily combined, without departing from the scope or spirit of the invention.

As used herein, the term "or" is an inclusive "or" operator and is equivalent to the term "and/or," unless the context clearly dictates otherwise.

The term "based on" is not exclusive and allows for being based on additional factors not described unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously. Within the context of a networked environment where two or more components or devices are able to exchange data, the terms "coupled to" and "coupled with" are also used to mean "communicatively coupled with", possibly via one or more intermediary devices.

In addition, throughout the specification, the meaning of "a", "an", and "the" includes plural references, and the meaning of "in" includes "in" and "on".

Although some of the various embodiments presented herein constitute a single combination of inventive elements, it should be appreciated that the inventive subject matter is considered to include all possible combinations of the disclosed elements. As such, if one embodiment comprises elements A, B, and C, and another embodiment comprises elements B and D, then the inventive subject matter is also considered to include other remaining combinations of A, B, C, or D, even if not explicitly discussed herein. Further, the transitional term "comprising" means to have as parts or members, or to be those parts or members. As used herein, the transitional term "comprising" is inclusive or open-ended and does not exclude additional, unrecited elements or method steps.

In various embodiments, the devices, instruments, systems, and methods described herein may be used to relax RRM measurements performed by a UE. As described above, the current measurement criteria and rules may not be suitable or sufficient for a UE that is mostly stationary. For these types of UEs, current relaxed measurements may still impose requirements that are unnecessary, which may result in a waste of energy and/or inefficient using of network resources (e.g., occupying radio resources, increased network traffic, or the like). Certain aspects of the disclosure and their embodiments may provide solutions to these or other challenges. Various embodiments of the present invention add additional factors, parameters, criteria, and/or rules for further relaxing RRM measurements for a UE in a stationary-mobility state. A UE in a stationary-mobility state has a lower mobility than the UE in a low-mobility state. For example, the UE in stationary-mobility state can stay at the same physical location for hours or days.

Based on various embodiments of the present invention, a UE can determine whether it is in a stationary-mobility state and if so, adjust RRM measurements accordingly. The embodiments in the present invention may provide one or more of the following technical advantage(s). Energy consumption can be reduced because less RRM measurements are performed in a unit time period. For example, a battery-operated UE can operate longer before it needs to be recharged. Further, network resources can be more efficiently allocated and used. For example, when a UE performs less RRM measurement and thus requires less radio resources, the network node can allocate radio resources to other UEs. Further, network traffic can be reduced such that more bandwidth can be freed for other uses.

It should also be appreciated that the following specification is not intended as an extensive overview, and as such, concepts may be simplified in the interests of clarity and brevity.

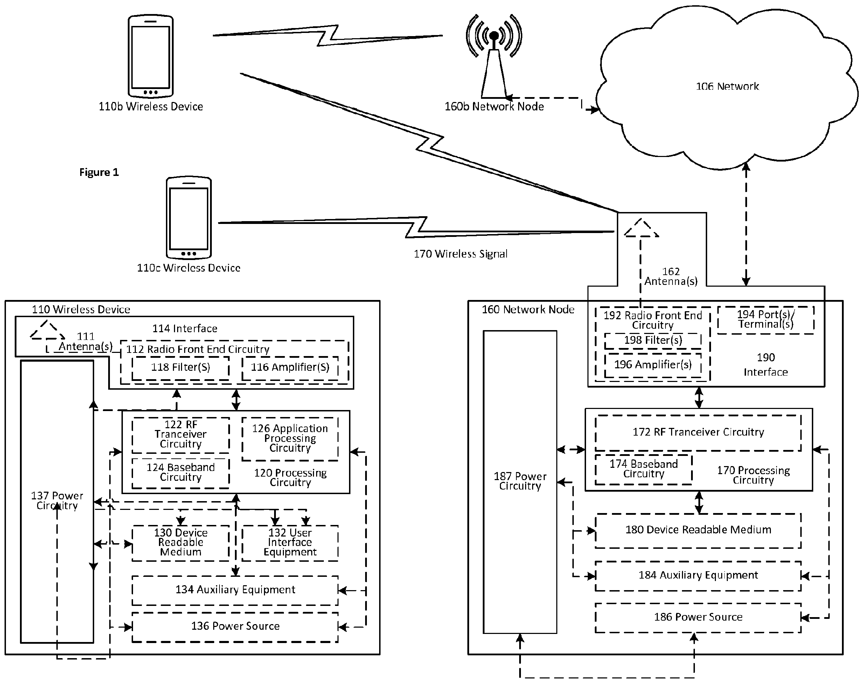

Although the subject matter described herein may be implemented in any appropriate type of system using any suitable components, the embodiments disclosed herein are described in relation to a wireless network, such as the example wireless network illustrated in Figure 1. For simplicity, the wireless network of Figure 1 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), New Radio (NR) and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 1, network node 160 includes processing circuitry 170, device readable medium 180, interface 190, auxiliary equipment 184, power source 186, power circuitry 187, and antenna 162. Although network node 160 illustrated in the example wireless network of Figure 1 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a directional antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in Figure 1 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

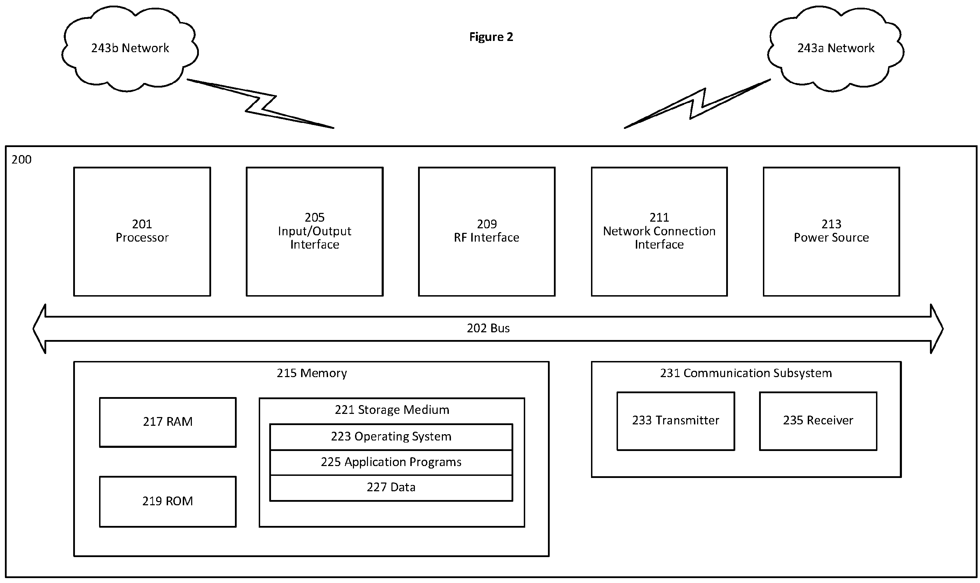

Figure 2 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller).

Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-IoT UE, a machine type communication (MTC) UE, a RedCap UE, and/or an enhanced MTC (eMTC) UE. UE 200, as illustrated in Figure 2, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 2 is a UE, the components discussed herein are equally applicable to a WD, and vice-versa.

In Figure 2, UE 200 includes processor 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in Figure 2, or only a subset of the components. The level of integration between the components may vary from one UE to another UE. Further, certain UEs may contain multiple instances of a component, such as multiple processors, memories, transceivers, transmitters, receivers, etc.

In Figure 2, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 2, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In Figure 2, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

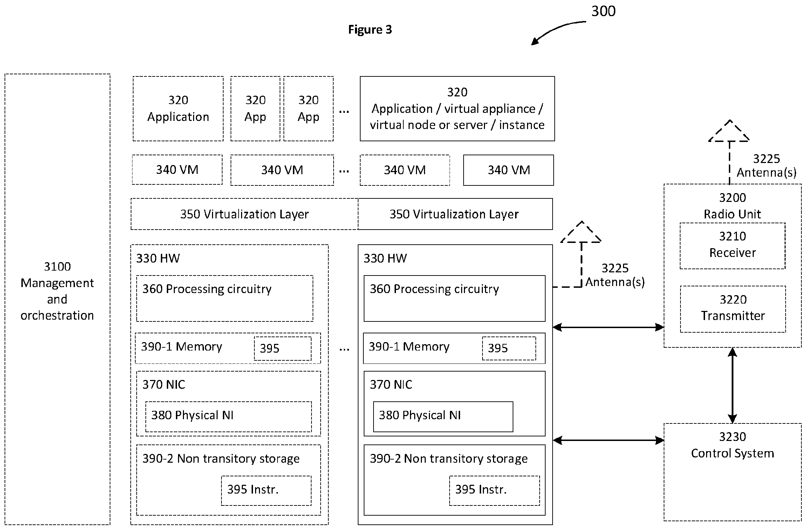

**Figure 3** is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in Figure 3, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Figure 3.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

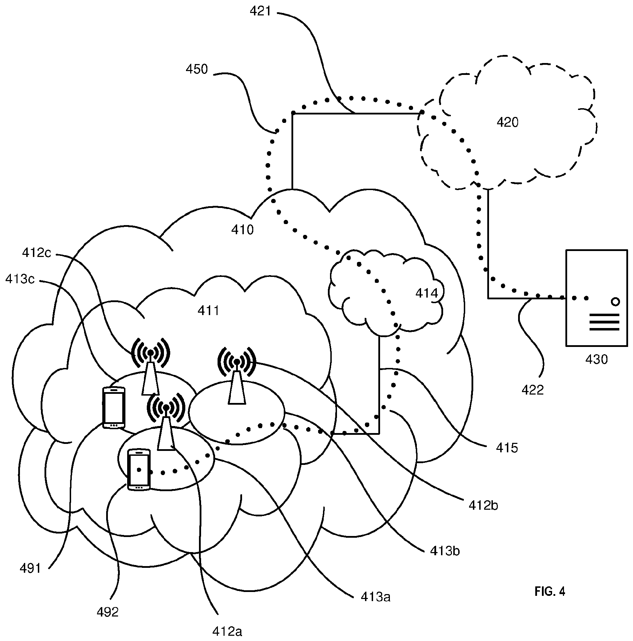

With reference to Figure 4, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Figure 4 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

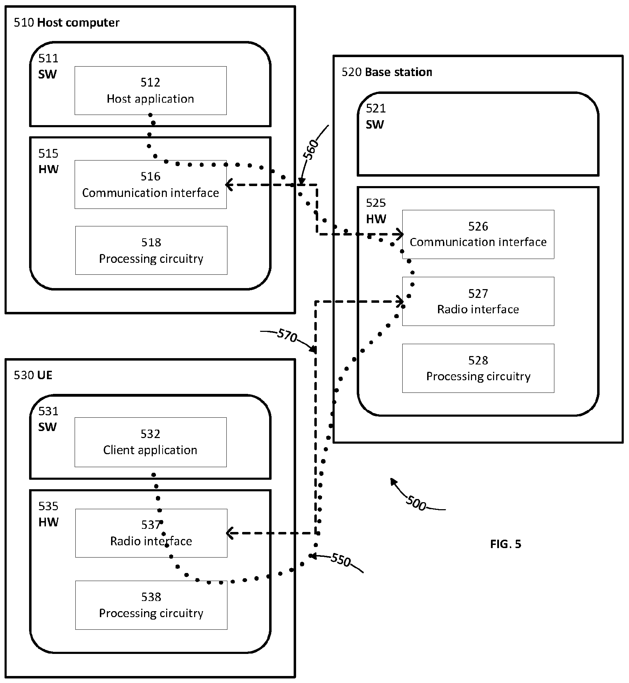

Example implementations, in accordance with an embodiment, of the UE, base station and host computer discussed in the preceding paragraphs will now be described with reference to Figure 5. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Figure 5) served by base station 520. Communication interface 526 may be configured to facilitate connection 560 to host computer 510. Connection 560 may be direct or it may pass through a core network (not shown in Figure 5) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in Figure 5 may be similar or identical to host computer 430, one of base stations 412a, 412b, 412c and one of UEs 491, 492 of Figure 4, respectively. This is to say, the inner workings of these entities may be as shown in Figure 5 and independently, the surrounding network topology may be that of Figure 4.

In Figure 5, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the battery life of stationary UEs and thereby provide benefits such as smaller or cheaper devices allowing OTT services to be deployed in more environments and to reduce maintenance costs (e.g., fewer service calls to replace/recharge batteries).

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

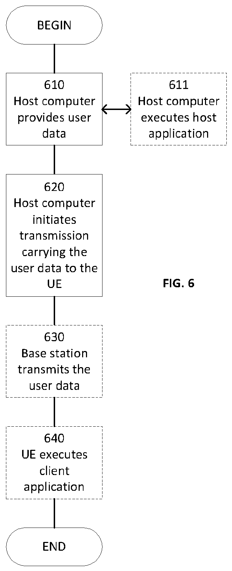

Figure 6 is a flowchart illustrating a method implemented in a communication system, in accordance with one embodiment. The communication system includes a host computer, a base station and a UE which may be those described with reference to Figures 4 and 5. In some embodiments, the UE may be a RedCap UE. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

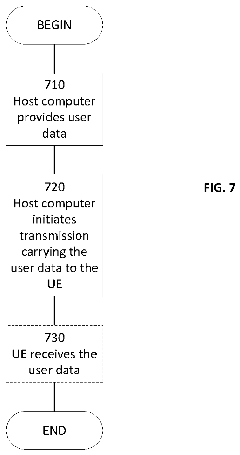

Figure 7 is a flowchart illustrating a method implemented in a communication system, in accordance with one embodiment. The communication system includes a host computer, a base station and a UE which may be those described with reference to Figures 4 and 5. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

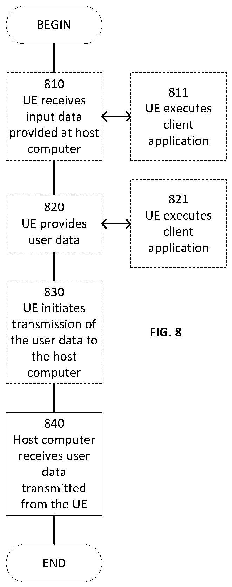

Figure 8 is a flowchart illustrating a method implemented in a communication system, in accordance with one embodiment. The communication system includes a host computer, a base station and a UE which may be those described with reference to Figures 4 and 5. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

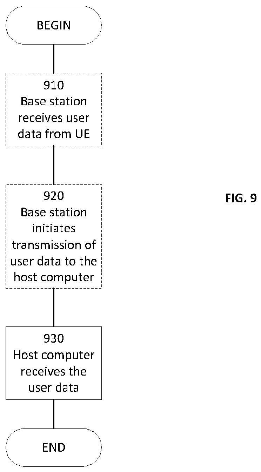

Figure 9 is a flowchart illustrating a method implemented in a communication system, in accordance with one embodiment. The communication system includes a host computer, a base station and a UE which may be those described with reference to Figures 4 and 5. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

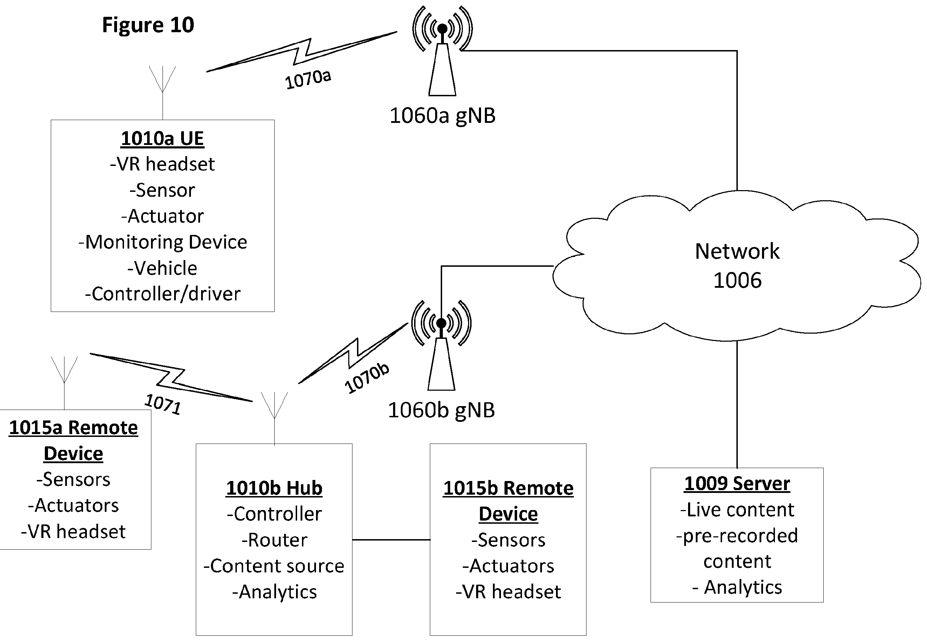

Figure 10 depicts a wireless network comprising different devices connected, either directly or indirectly, to the wireless network through one or more access network nodes, such as gNBs 1060a and 1060b. In particular, the wireless network includes access network nodes such as gNBs 1060a and 1060b, UE 1010a, hub 1010b, remote devices 1015a and 1015b and server 1009. UE 1010a and hub 1010b may be any of a wide variety of devices capable of communicating wirelessly with gNBs 1060's. Although hub 1010b is referred to as a hub, it may also be considered a UE (with hub functionality) because it is able to communicate wirelessly with gNB 1060b using a standard protocol, for example a wireless standard such as one provided by 3GPP. In fact, each of the devices illustrated in Figure 10 represent a wide variety of different devices that can be used in different scenarios as discussed in more detail below. Any of these devices which are able to communicate wirelessly with a gNB, eNB or any other similar 3GPP access node may be considered a wireless device or UE.

Looking now at some of the possibilities, UE 1010a may be any of a variety of different devices that are able to wirelessly communicate with gNB 1060a. Some examples, which are listed in Figure 10, include a virtual reality (VR) headset, a sensor, an actuator, a monitoring device, a vehicle, or a remote controller. These examples are not exhaustive and include therein a wide variety of more specific devices, including a wide range of Internet of Things (IoT) devices. For example, in embodiments where UE 1010a is a VR headset, UE 1010a may be a cell phone that is used with a head mount or it may be a standalone or dedicated VR headset. In some embodiments UE 1010a may be an augmented reality (AR) headset. As an AR or VR headset UE 1010a may be used for entertainment (e.g., gaming, videos, etc.), education/business (e.g., remote conferences, virtual lectures, etc.), medical (e.g., remote diagnostic, patient consultation, etc.), or any other use in which virtual or augmented content may be provided to a remote user. In any of these cases UE 1010a may be receiving content via wireless connection 1070a with gNB 1060a.

As another example, in embodiments where UE 1010a is a sensor or monitoring device, UE 1010a may be a motion, gravitational, moisture, temperature, biometric, speed, door/window open, smoke, fire, volume, flow, or any other type of device that is able to detect or measure one or more conditions. As a sensor UE 1010a may also be able to capture conditions. For example, UE 1010a may capture images if it comprises a camera or sound if it comprises a microphone. Regardless of the type of sensor, UE 1010a may provide an output via wireless connection 1070a to gNB 1060a. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, in embodiments where UE 1010a is an actuator, UE 1010a may be a motor, switch, or any other device that may change states in response to receiving an input via wireless connection 1070a. For example, UE 1000a may be a vibrator that creates vibration to provide a user with haptic feedback. As another example UE 1000a may be a small motor that adjusts the control surfaces of a drone in flight or to a robotic arm performing a medical procedure. As another example, UE 1000a may be a switch that remotely turns on another device, such as a light.

As another example, in embodiments where UE 1010a is a vehicle, UE 1010a may be a drone, car, plane, ship, train, tractor, robot, or any other type of device comprising one or more sensors and/or actuators that may change its locations whether autonomously or at the direction of a user. In such embodiments where UE 1010a is a remotely controlled vehicle, such as a drone, it may receive instructions on movement, actuating, or sensing from a user via wireless connection 1070a and provide location, sensor or video information back to the user via wireless connection 1070a. In such embodiments where UE 1010a is an autonomous vehicle it may receive alerts and other messages from other vehicles and/or infrastructure sensors via wireless connection 1070a as well provide its own telemetry data to others via wireless connection 1070a.

As another example, in embodiments where UE 1010a is a remote control, UE 1010a may be a device dedicated to controlling other devices or a general-purpose computer with a program or application that provides control of other devices. UE 1010a may send commands to a remote device via wireless connection 1070a. UE 1010a may also receive feedback, telemetry, or other information from the remote device via wireless connection 1070a. UE 1010a may present this received information to a user who may then issue commands for the remote device. For example, UE 1010a may receive via wireless connection 1070a a video signal from a remote surgical room and then issue commands via wireless connection 1070a to a remote surgical machine that can execute the commands.

While only a single UE 1010a is illustrated in Figure 10, in practice any number of UEs may be used together with respect to a single use case. For example, a first UE 1010a may be a speed sensor used in a drone which provides the drone's speed information to a second UE 1010a that is a remote control operating the drone. When the user makes changes from the remote control, a third UE 1010a that is an actuator may adjust a throttle on the drone to increase or decrease the speed. Similarly, in the example above, the first (sensor) and third (actuator) UE 1010a's may be a single UE that handles communication for both the speed sensor and the actuators or UE 10 110a may comprise one or more of the above. Similarly, in the example above, a hub, such as hub 1010b, may be used to handle communication between the sensors and actuators and the controller.

Hub 1010b may be any of a variety of different devices that provides wireless access to gNB 1060b for one or more remote devices 1015a. Some examples of different types of hubs are listed in Figure 10 and include a controller, router, content source and analytics. Hub 1010b may include memory to store data (e.g., video, audio, images, buffer, sensor data, file share) that is collected from, or is to be provided to, remote device 1015a. Hub 1010b may include a processor, operating system, and server functionality. Hub 1010b may include components for wireless communication to enable wireless connection 1071 to remote device 1015a and/or components for a fixed connection to remote device 1015b. Hub 1010b may also include routing capabilities, firewall capabilities, a VPN-server or VPN-client. Hub 1010b may also allow for a different communication scheme and/or schedule between hub 1010b and remote devices 1015 and between hub 1010b and network 1006.

As one example, hub 1010b may be a broadband router enabling direct or indirect access to network 1006 for remote device 1015a. In certain embodiments, hub 1010b may facilitate communication between remote devices 1015a and 1015b. This may be done with, or without, the communications passing through network 1006. In some embodiments, hub 1010b may simply forward the data from remote device 1015a or 1015b to network 1006. In some embodiments, hub 1010b may first filter, buffer, store, analyze or collate the data from remote device 1015a or 1015b before sending on the data to network 1006 or another remote device. Similarly, the data from network 1006 may pass directly through hub 1010b or it may first be processed by hub 1010b on the way to remote device 1015a or 1015b.

As another example, hub 1010b may be a controller that sends commands or instructions to one or more actuators in remote device 1015a. The commands or instructions may be received from a second remote device 1015b, from gNB 1060b or by executable code, script or process instructions in hub 1010b.

As another example, hub 1010b may be a collection place for data from one or more remote devices 1015a and/or 1015b. For example, remote devices 1015a and/or 1015b may be a sensor, a camera, measurement equipment, or any other type of device discussed herein that may provide output or receive input. Hub 1010b may act as a temporary storage for data from, for example remote device 1015b and, in some embodiments, may perform analysis, or other processing on the data. Hub 1010b may have a constant/persistent or intermittent connection to gNB 1060b.

As another example, hub 1010b may be a content source. For example, when remote device 1015a is a VR headset, display, loudspeaker or other media delivery device, hub 1010b may retrieve VR assets, video, audio, or other media via gNB 1060b which it then provides to remote device 1015a either directly, after some local processing, and/or after adding additional local content.

Remote device 1015a may be any of a variety of different devices, for example, remote device 1015a may be a device comprising one or more of sensors, actuators, and/or a screen. Remote device 1015a may alternatively be a VR (or AR) headset, a Machine-2-Machine (M2M) device, an IoT device, an internet of Everything (IoE) device, or any other type of device which is capable of accessing a communication network wirelessly via a hub or a device capable of acting as a hub, which in the present context comprise providing network access to a device which is not able to communicate directly with communication network 1006 via gNB 1060a or 1060b. In some scenarios, remote device 1015a may be able to establish a wireless connection with gNB 1060a or 1060b yet nonetheless still connects via hub 10 110b. Remote device 1015b may be similar to remote device 1015a in most respects except that it has a wired connection to hub 1010b rather than a wireless connection, such as wireless connection 1071.

gNBs 1060a and 1060b may provide various wireless devices such as UE 1010a and hub 1010b with wireless access to network 1006. Network 1006 may connect the various devices illustrated in Figure 10 including server 1009 which may host a variety of applications such as live and pre-recorded content, data collection services such as retrieving and compiling data on various ambient conditions detected by a plurality of remote devices 1015a, 1015b or UE 1010a, analytics functionality, social media, functions for controlling or otherwise interacting with remote devices, functions for an alarm and surveillance center, or any other such function done by a server. For example, factory status information may be collected and analyzed by server 1009. As another example, server 1009 may process audio and video data which may have been retrieved from UE 1010a for use in creating maps. As another example, server 1009 may collect and analyze real-time data to assist in controlling vehicle congestion (e.g., controlling traffic lights). As another example, server 1009 may store surveillance video uploaded by remote device 1015b via hub 1010b. As another example, server 1009 may store media content such as video, audio, VR, or AR which it can broadcast, multicast or unicast to remote devices such as UE 1010a or remote device 1015a. As other examples, server 1009 may be used for energy pricing, for remote control of non-time critical electrical load to balance power generation needs, location services, presentation services (such as compiling diagrams etc. from data collected from remote devices), or any other function of collecting, retrieving, storing, analyzing and/or transmitting data.

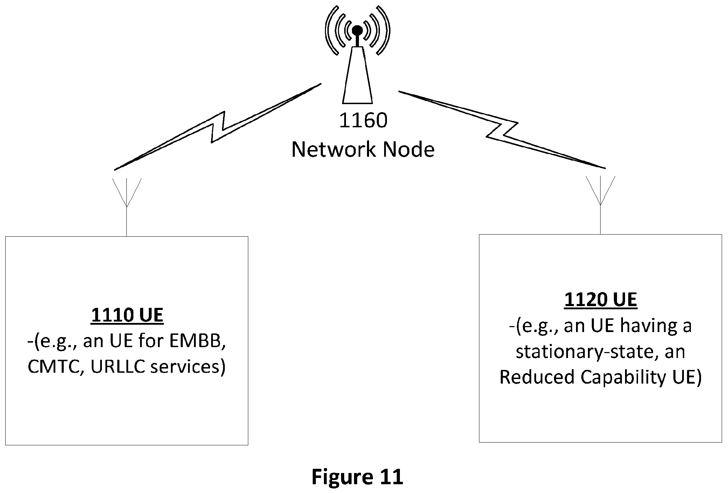

Figure 11 illustrates an exemplary network node 1160 and exemplary UEs 1110 and 1120. Network node 1160 can be any type of node described above (e.g., node 160b, 1060a, 1060b). In one embodiment, UE 1110 is a UE that is configured to provide eMBB, CMTC, and/or URLLC of services; and UE 1120 is a RedCap UE configured to provide MTC, MBB, IoT type of services. In general, UE 1110 may have a higher mobility than UE 1120. For example, UE 1110 can be a smartphone, a sensor mounted in a vehicle, a drone, or the like. UE 1120 can be a surveillance camera, a roadside sensor, a parking structure sensor, or the like. The existing RRM measurement criteria and rules may be used for UE 1110 and UE 1120. However, UE 1120 may remain in a same physical location for an extended period of time (e.g., hours, days, months). Thus, performing measurements according to the existing RRM measurement criteria and rules may result in a waste of energy and network resources. It is understood that while UE 1110 may generally have a higher mobility than UE 1120, UE 1110 may sometimes also be in a stationary-mobility state. For example, depending on a user (e.g., a patient), a smartphone may stay in a physical location for an extended period of time and may thus be considered to be in a stationary-mobility state. As a result, relaxing RRM measurement configurations can be performed for one or both of UE 1110 and UE 1120, whether it is a RedCap device or not.

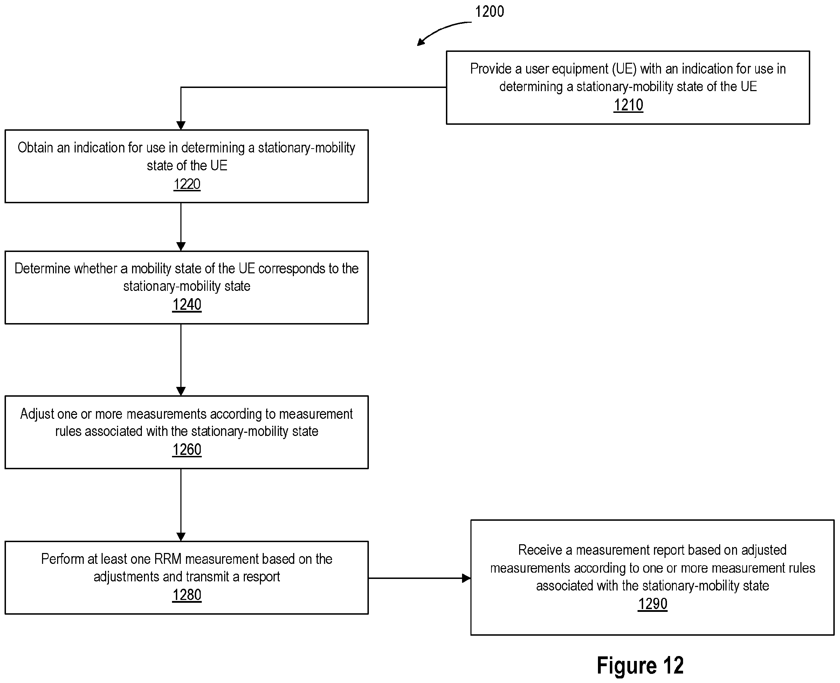

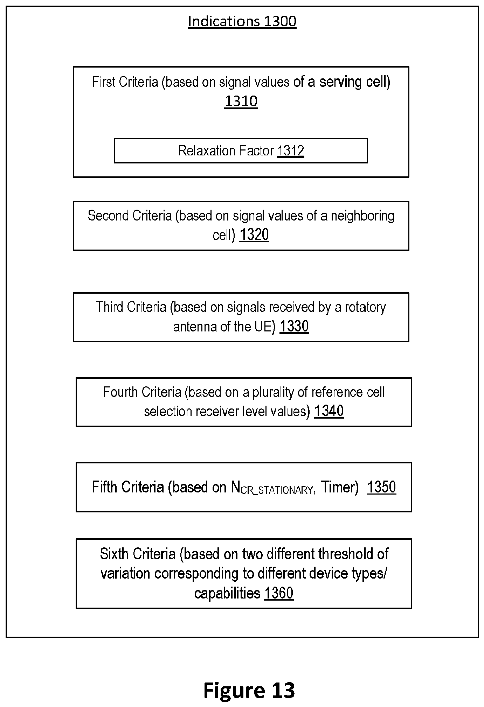

In some embodiments, a method 1200 is performed by a network node (e.g., node 1160) and a UE (e.g., UE 1110 and/or 1120) for relaxing RRM measurements as illustrated in Figure 12. In step 1210 of Figure 12, the network node provides the UE with an indication for use in determining a stationary-mobility state of the UE. Correspondingly in step 1220, the UE obtains the indication provided by the network node. A UE in a stationary-mobility state has a lower mobility than the UE in a low-mobility state. In 3GPP TS 38.304 specification, for a UE having a low mobility or at a cell edge, a low mobility evaluation setting and a cell edge evaluation setting can be configured such that existing relaxed RRM measurement criteria and rules may be applied. As discussed above, the existing relaxed RRM measurement criteria and rules may not be proper or sufficient for a UE in a stationary-mobility state. Therefore, additional relaxed RRM measurement criteria and rules are used, as described below in more detail using Figure 13.

With reference still to Figure 12, in step 1240, the UE determines, based on the indication provided by the network node, whether a mobility state of the UE corresponds to the stationary-mobility state. For example, the UE can obtain signal values associated with at least one of a serving cell, one or more beams of the serving cell, one or more neighboring cells, and one or more beams of the neighboring cells. Using the obtained signal values and the received indication, the UE can determine whether the mobility state of the UE corresponds to the stationary-mobility state.

In step 1260, in accordance with a determination that the mobility state of the UE corresponds to a stationary-mobility state, the UE adjusts one or more RRM measurements according to relaxed RRM measurement rules associated with the stationary-mobility state. Adjusting the RRM measurements comprises relaxing one or more time intervals used in performing the one or more measurements. By extending the time interval between RRM measurements, the adjustments reduce the amount of energy consumed when performing RRM measurements.

In step 1280, the UE performs at least one RRM measurement based on the adjustments. For example, the UE performs the RRM measurements of the serving cell and/or the neighboring cells at the extended time intervals. The RRM measurements can be performed at the cell level or beam level. In some embodiments, the UE transmits a measurement report to the network node based on the RRM measurements performed. In step 1290, the network node receives the measurement report. Based on the measurement report, the network node can manage the network resources for an efficient use thereof. For example, based on the measurement report, the network node, alone or with other network nodes, can assign, reassign, and release radio resources to other UEs in a single or multi-cell environment. The results would be a more efficient allocation of network resources and more balanced network traffic with an efficient use of network bandwidth. One or more steps shown in Figure 12 are described below in more detail.

As shown in Figure 13, indication 1300, which may be obtained by a UE, comprises one or more RRM measurement criteria for further relaxing RRM measurements if UE 1120 is in a stationary-mobility state. Figure 13 illustrates several examples of such criteria included in an indication 1300. First criteria 1310 are based on a cell selection RX level value (denoted by "Srxlev") of a serving cell of the UE, a reference cell selection received signal level value (denoted by "SrxlevRef") of a serving cell of the UE, a threshold of variation of the cell selection received signal level value (denoted by "$S_{SearchDeltaP}$"), and a minimization factor based on a mobility state of the UE (denoted by "$S_{min\_ractor}$"). A serving cell of a UE is the cell on which the UE is camped. The serving cell is thus the cell that the UE has chosen after the cell selection or reselection process. As an example, using the above four parameters, first criteria 1310 can be expressed as the below [eq 1].

$$(\mathrm{Srxlev_{Ref}} - \mathrm{Srxlev}) < (S_{\mathrm{SearchDeltaP}} - S_{\mathrm{min\_factor}}) \text{ where } S_{\mathrm{min\_factor}} \geq 0 \text{ dB} \qquad [\mathrm{eq.\ 1}]$$

In [eq. 1], Srxlev denotes cell selection RX level (e.g., the cell selection current received signal level) measured by the UE; and SrxlevRef denotes a reference cell selection received signal level value, which can be the Srxlev measured in a previous time period of measurement cycle. Therefore, ($\mathrm{Srxlev_{Ref}}$ - Srxlev) represents a variation of the cell selection RX level value over a preconfigured period of time. In [eq. 1], $S_{SearchDeltaP}$ denotes a threshold variation of the cell selection received signal level value and $S_{min\_factor}$ is factor representing an amount of adjustment (e.g., a reduction amount) that is applied to the threshold $SS_{earchDeltaP}$. $S_{min\_factor}$ is a real number greater than or equal to zero dB. By applying $S_{min\_factor}$ to $S_{SearchDeltaP}$, the threshold variation of the cell selection received signal level value is adjusted (e.g., reduced or tightened) such that fulfilling the criteria as expressed in [eq. 1] indicates that the UE is at a stationary-state (e.g., not changing its location for an extended period of time such as hours or days). In some embodiments, $S_{min\_factor}$ can be configured to have different levels or values. For example, if a first UE is expected to have less mobility than a second UE. The $S_{min\_factor}$ may be configured to have a larger value (and thus greater reduction of the variation threshold $S_{SearchDeltaP}$) for the first UE than for the second UE.

First criteria 1310 can also be expressed as [eq. 2] below, which is a variation of [eq. 1].

$$(\mathrm{Srxlev_{Ref}} - \mathrm{Srxlev}) < (S_{\mathrm{SearchDeltaP}} / S_{\mathrm{min\_factor}}) \text{ where } S_{\mathrm{min\_factor}} \geq 1 \text{ dB} \qquad [\mathrm{eq.\ 2}]$$

In [eq. 2], the $S_{min\_factor}$ is divided by $S_{SearchDeltaP}$, thereby also reducing the threshold variation such that fulfilling the criteria as expressed in [eq. 2] also indicates that the UE is at a stationary-mobility state.

Equations described above (e.g., [eq. 1] and [eq. 2]) are applicable to determine whether a UE is in a stationary-mobility state. For example, a UE in a stationary-mobility state may only slightly change its physical location or may not change its a physical location for a predetermined period of time (e.g., hours or days). A UE may also have a rotatory antenna to receive signals from different directions associated with different beams. For example, a network node may have NR beamforming capabilities. Beamforming is used with phase-array antenna systems to focus the wireless signals in a chosen direction, which results in an improved signal strength at the UE. Equations described above (e.g., [eq. 1] and [eq. 2]) are also applicable to UEs having rotatory antennas. In those situations, $Srxlev_{Ref}$ and Srxlev represent beam level signal values instead of cell level signal values.

In some embodiments, a UE in a stationary-mobility state does not rotate its antenna. For these types of UEs, first criteria 1310 can be expressed as [eq below, which are respective variations of [eq. 1] and [eq. 2]. In [eq. 3] and [eq. 4], the absolute values of the $S_{SearchDeltaP}$ adjusted by $S_{min\_factor}$ are compared with the variation of the cell selection RX level value such that fulfilling the criteria as expressed in [eq. 3] and [eq. 4] indicates that the UE is in a stationary-mobility state. The use of absolute values in [eq. 3] and [eq. 4] accounts for the non-rotatory antenna of the UE. In [eq. 3] and [eq. 4], $Srxlev_{Ref}$ and Srxlev may represent beam level signal values or cell level signal values. $S_{min\_factor}$ can also be configured correspondingly to beam level or cell level signal values.

$$(Srxlev_{Ref} - Srxlev) < | (S_{SearchDeltaP} - S_{min\_factor}) \quad | \text{ where } S_{min\_factor} > 0 \text{ dB}$$

$$[eq. 3]$$

$$(Srxlev_{Ref} - Srxlev) < | (S_{SearchDeltaP} / S_{min\_factor}) | \text{ where } S_{min\_factor} > 1 \text{ dB} \qquad [eq. 4]$$

It is understood that first criteria 1310 can be expressed by any one or more of [eq. 1]-[eq. 4] above. The parameter $S_{min\_factor}$ can be preconfigured in any desired manner corresponding to the equation used and/or level of mobility of the UE as discussed above.

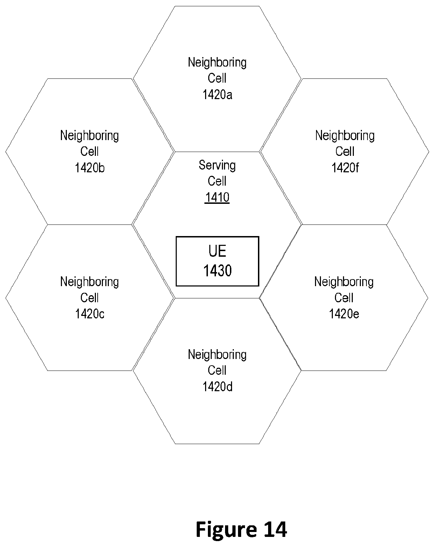

With reference to Figure 13, in one embodiment, indication 1300 comprises one or more second criteria 1320. Second criteria 1320 are based on a measured received signal level value (denoted by "Qrxlevmeas") of a neighbouring cell, a reference signal received power (RSRP) of a neighboring cell, a threshold of variation of the measured received signal level value of a neighboring cell, and a second minimization factor. As shown in Figure 14, a serving cell 1410 is where a UE (e.g., UE 1430) is camped. Serving cell 1410 can have one or more neighboring cells 1420a-f. In some embodiments, each of the serving cell 1410 and neighboring cells 1420a-f corresponds to a respective network node (e.g., NBs, eNBs, gNBs or other types of wireless access points, not shown). Second criteria 1320 can be expressed similar to [eq. 1]-[eq. 4] using these parameters of the neighboring cell. For example, if UE 1430 is located close to an edge of serving cell 1410 (e.g., bottom edge as shown in Figure 14), it can also perform measurements of received signal level value of one or more neighboring cells such as neighboring cells 1420d. Similar to those described above with respect to a serving cell, the determination of whether the UE is in a stationary-mobility state can also be performed based on comparison between the variation of the cell received signal level value of the neighboring cells and a corresponding threshold variation adjusted by a second minimization factor. The comparison can be done in a similar manner as those described above in [eq. 1]-[eq. 4] for the serving cell. In some embodiments, the determination of whether the UE is in a stationary-mobility state can be based on both the measurements of the serving cell and the measurements of the one or more neighboring cells. Using both measurements may improve the measurement accuracy in certain circumstances (e.g., when a UE is located at a cell edge or between two or more cells).

With reference back to Figure 13, in one embodiment, first criteria 1310 can be further based on a relaxation factor 1312 denoted by $S_{relax\_factor}$. The relaxation factor 1312 can be used together with equations described above to adjust first criteria 1310. While not shown, a same or different relaxation factor can also be used together with second criteria 1320. For example, the relaxation factor can be added to [eq 1] to form [eq. 5] below.

$$(Srxlev_{Ref} - Srxlev) < (S_{SearchDeltaP} - S_{min\_factor} + S_{relax\_factor})$$

$$[eq. 5]$$

In [eq. 5], $S_{min\_factor}$ denotes a minimization factor, which is greater than or equal to zero dB; and $S_{relax\_factor}$ denotes the relaxation factor, which is greater than or equal to 0 dB. In a similar manner, the relaxation factor can also be incorporated into other equations discussed above.

The relaxation factor is an additional parameter used to adjust first criteria 1310 and/or second criteria 1320 to account for device capabilities and/or types of UE. Different UEs may have different types and device capabilities. For example, a RedCap UE described above may have a reduced number of antennas, non-rotatory antennas, limited data rate, relaxed latency capabilities, greater battery life limitations due to smaller dimensions, or the like. There are also different types of RedCap UEs such as wearable devices, wireless sensors, IoT devices, video surveillance cameras, or the like. In some embodiments, the measurement accuracy that a UE can obtain is limited by the UE's capabilities and/or types. As a result, the measurements of one or more of the above-described parameters such as Srxlev may have greater variance for a UE with reduced capabilities. To account for this greater variance, different levels or values of relaxation factors can be applied to adjust equations of first criteria 1310 and/or second criteria 1320. For example, if a RedCap UE has a large measurement inaccuracy or variance, a larger value of $S_{relax\_factor}$ can be applied to ($S_{SearchDeltaP}$ - $S_{min\_factor}$) to account for such inaccuracy or variance. The effective result is that a larger value of ($Srxlev_{Ref}$ - Srxlev) may also fulfill [eq. 5], thereby indicating a stationary-mobility state of the UE.

In some embodiments, greater variance of the value of ($Srxlev_{Ref}$ - Srxlev) may also be a result of measurements using different number of beams. For example, a UE having a rotary antenna may use a first number of beams to determine the current Srxlev value, while using a second number of beams to determine the $Srxlev_{Ref}$. The first number and the second number of beams are not necessarily the same. If the numbers are different, the value of ($Srxlev_{Ref}$ - Srxlev) resulted from such measurements may be greater than the value obtained from measurements using the same number of beams. The relaxation factor ($S_{relax\_factor}$) can be applied to ($S_{SearchDeltaP}$ - $S_{min\_factor}$) to account for measurements using different number of beams.

It is understood that the minimization factor $S_{min\_factor}$ and the relaxation factor $S_{relax\_factor}$ can be configured to have any value based on one or more variables as described above, such as signal strength, device location, device capabilities, device types, or the like. For example, a UE having a rotary antenna may be configured to have different a minimization factor and/or a relaxation factor from a UE having no rotary antenna.

With reference to Figure 13, in one embodiment, indication 1300 comprises one or more third criteria 1330. Third criteria 1330 are based on signals received by a rotary antenna of the UE from one or more beams of one or more neighboring cells. Similar to those described above with respect to second criteria 1320, measurements of a neighboring cell can be performed not only at the cell level but also at the beam level. As described above, a network node may have NR beamforming capabilities. And a UE may have a rotary antenna to receive signals from different directions associated with different beams transmitted by the network node. Thus, the measurement of the variation of the received signal level values can be performed for individual beams of a neighboring cell. Such beam-level measurements can be used to determine whether third criteria 1330 is fulfilled and in turn determine whether the UE is in a stationary-mobility state. The third criteria 1330 can be expressed in a similar manner as those equations described above, but using beam-level signal values for one or more neighboring cells. In some embodiments, a UE has a rotary antenna to track different beams periodically in different directions. One or more beams having greatest signal strength of previously measured neighboring cells can be evaluated periodically (e.g., based on the antenna's rotating period) to determine whether more than a threshold number of beams (of different neighboring cells) has changed. If the number of beams changed is not more than the threshold number of beams, it may indicate that the UE is in a stationary-mobility state.

With reference still to Figure 13, in one embodiment, indication 1300 comprises one or more fourth criteria 1340. Similar to the above-described criteria 1310-1330, fourth criteria 1340 are based on a cell selection RX level value (denoted by "Srxlev"), a threshold variation of the cell selection received signal level value (denoted by "$S_{SearchDeltaP}$"), and a minimization factor corresponding to the mobility state of the UE (denoted by "$S_{min\_factor}$"). Fourth criteria 1340 are further based on a plurality of reference cell selection received signal level values (denoted by "$Srxlev_{Ref\_1}$...$Srxlev_{Ref\_N}$"), instead of one reference cell selection received signal level value used in previously-described criteria. Each of the plurality of reference cell selection received signal level values ($Srxlev_{Ref\_1}$...$Srxlev_{Ref\_N}$) corresponds to a different direction for receiving signals by a rotary antenna of a UE. The different directions may correspond to different beams transmitted by a network node having beamforming capabilities. For example, $Srxlev_{Ref\_1}$ is a reference measurement determined for a first direction, $Srxlev_{Ref\_2}$ is a reference measurement determined for a second direction, and so forth.

In one embodiment, the plurality of reference cell selection received signal level values ($Srxlev_{Ref\_1}$...$Srxlev_{Ref\_N}$) are determined using signals received in one rotation of the rotary antenna of the UE. In some embodiments, fourth criteria 1340 are expressed by comparing the cell selection RX level value (Srxlev) with a corresponding one of the plurality of reference cell selection received signal level values ($Srxlev_{Ref\_1}$...$Srxlev_{Ref\_N}$). For example, if the cell selection RX level value (Srxlev) is measured at the beam level for a particular beam associated with a particular direction, Srxlev is compared to only the corresponding reference cell selection received signal level value (e.g., $Srxlev_{Ref\_x}$) measured for the same direction. Such comparison can be performed according to any of the equations or methods describes above with respect to criteria 1310-1330.

With reference still to Figure 13, in one embodiment, indication 1300 comprises one or more fifth criteria 1350. Fifth criteria 1350 are based on a number of cell reselections (denoted by "$N_{CR\_STATIONARY}$") for determining whether the mobility state of the UE corresponds to a stationary-mobility state. The 3GPP TS38.304 specification defines the mobility states of a UE and the associated state detection criteria. The UE's mobility state is determined using several parameters including a timer $T_{CRmax}$ and the number of cell reselection thresholds $N_{CR\_H}$ and $N_{CR\_M}$. If the number of cell reselections during time period $T_{CRmax}$ is less than $N_{CR\_M}$, the UE is determined to be in a normal-mobility state. If the number of cell reselections during time period $T_{CRmax}$ is greater than or equal to $N_{CR\_M}$ but less than or equal to $N_{CR\_H}$, the UE is determined to be in a medium-mobility state. If the number of cell reselections during time period $T_{CRmax}$ is greater than $N_{CR\_H}$, the UE is determined to be in a high-mobility state. Furthermore, scaling factors are applied to account for different types of cells (e.g., NR cells, E-UTRA cells).

In some embodiments, fifth criteria 1350 comprises an additional number of cell reselection threshold $N_{CR\_STATIONARY}$ for determining whether the mobility state of the UE corresponds to the stationary-mobility state. For example, fifth criteria 1350 can be expressed as one or more comparisons between the number of cell reselections during time period $T_{CRmax}$ and the number of cell reselection thresholds $N_{CR\_M}$ and $N_{CR\_STATIONARY}$. For example, based on fifth criteria 1350, if the number of cell reselections during time period $T_{CRmax}$ is greater than $N_{CR\_STATIONARY}$ but less than $N_{CR\_M}$, the UE is determined to be in a normal-mobility state. And if the number of cell reselections during time period $T_{CRmax}$ is less than or equal to $N_{CR\_STATIONARY}$, the UE is determined to be in a stationary-mobility state.

While the above examples of fifth criteria 1350 uses the cell level measurement as illustration, it is understood that a similar threshold for determining the stationary-mobility state can be configured for beam level measurements. For example, an additional threshold similar to $N_{CR\_STATIONARY}$ can be configured to define the threshold number of beam changes (e.g., within the serving cell) with another timer (e.g., denoted by "$T_{CRmax\_stationary}$"). Using the additional threshold and the timer, determination of whether the UE is in a stationary-mobility state can be performed in a similar manner as described above.

With reference still to Figure 13, in one embodiment, indication 1300 comprises one or more sixth criteria 1360. Similar to the criteria 1310-1350 described above, sixth criteria 1360 are based on a cell selection RX level value (Srxlev) of a serving cell and a reference cell selection received signal level value (SrxlevRef) of the serving cell. Sixth criteria 1360 are further based on two thresholds, i.e., a first threshold variation of the cell selection received signal level value ($S_{SearchDeltaP\_x}$) and a second threshold variation of the cell selection received signal level value ($S_{SearchDeltaP\_y}$). In some embodiments, the first threshold variation of the cell selection received signal level value ($S_{SearchDeltaP\_x}$) and the second threshold variation of the cell selection received signal level value ($S_{SearchDeltaP\_y}$) correspond to different device types and/or capabilities.

As described above, a UE may have different types and/or capabilities. For example, UEs used for eMBB/CMTC services are usually high performance UEs capable of providing high data rate, low latency, and high reliability. These types of UEs may have, for example, faster processors, a larger number of processors, more memory, a battery with greater capability, rotatory antennas, etc. RedCap UEs are different. They usually have less device capabilities for providing less complex or demanding services, such as MTC or MBB services with low performance requirements. By using two different thresholds $S_{SearchDeltaP\_x}$ and $S_{SearchDeltaP\_y}$, sixth criteria 1360 can provide unified or integrated criteria for determining the mobility state for UEs with different types and/or capabilities. In one embodiment, sixth criteria 1360 can be expressed as [eq. 6] below.

$$(\mathrm{Srxlev_{Ref}} - \mathrm{Srxlev}) < \min (S_{SearchDeltaP\_x}, S_{SearchDeltaP\_y}) \qquad \text{[eq. 6]}$$

In [eq. 6] above, $S_{SearchDeltaP\_y}$ denotes a threshold variation of the cell selection received signal level value for RedCap devices and $S_{SearchDeltaP\_x}$ denotes threshold variation of the cell selection received signal level value for all other devices (e.g., UEs providing eMBB/CMTC services). If the UE is a non-RedCap device, $S_{SearchDeltaP\_y}$ is zero and only $S_{SearchDeltaP\_x}$ is used for determining the mobility state of the UE. If the UE is a RedCap device, the minimum of the configured thresholds $S_{SearchDeltaP\_x}$ and $S_{SearchDeltaP\_y}$ is used in [eq. 6] to determine whether the UE is in a stationary-mobility state. The determination using [eq. 6] can be performed in a similar manner as described above with respect to criteria 1310-1350. In one embodiment, sixth criteria 1360 also comprise an indication of whether $S_{SearchDeltaP\_y}$ should be scaled based on the UE's capability (e.g., using the scaling factors similar to those described in fifth criteria 1350).

With reference to Figure 13, it is understood that indication 1300 can comprise any one or more of criteria 1310-1360 in any desired combination. It is further understood that one or more of criteria 1310-1360 and their associated parameters (e.g., reference cell selection received signal level values, variation thresholds, etc.) can be configured in any manner to account for different UE capabilities and/or types. As shown in [eq. 6], for example, different criteria or thresholds may be applied for a RedCap UE compared to a non-RedCap UE.

In some embodiments, in addition to one or more of criteria 1310-1360, indication 1300 further comprises a timer parameter (not shown in Figure 13) indicating an amount of time associated with a stationary-mobility state of the UE. The timer parameter may be a new parameter that was not used for other mobility states (e.g., high, medium, normal, low) or may be an existing timer parameter used for other mobility states. The timer parameter can be, for example, a timer denoted by $T_{SearchDeltaP-stationary}$, which represents the time period over which the Srxlev variation is evaluated for relaxed measurement for a UE in a stationary-mobility state. The timer parameter can also be an extension time denoted by $\Delta T_{extension}$, which represents the extra time to be applied to a timer for a UE in a low/normal/medium/high-mobility state such that the total time period is configured for the UE in a stationary-mobility state. The timer parameter can also be a scaling factor denoted by $SF_{extension}$, which represents the scaling to be applied to a timer for a UE in a low/normal/medium/high-mobility state such that the total time period is configured for the UE in a stationary-mobility state. The timer parameter can be included in indication 1300 or provided separately from a network node to a UE. In some embodiments, the timer parameter (e.g., $T_{SearchDeltaP\_stationary}$) can be applied in fifth criteria 1350. For example, instead of using $T_{CRmax}$

in fifth criteria 1350, $T_{SearchDeltaP\_stationary}$ can be used such that if the number of cell reselections during time period $T_{SearchDeltaP\_stationary}$ is less than or equal to $N_{CR\_STATIONARY}$, the UE is determined to be in a stationary-mobility state.

With reference back to Figure 12, a network node (e.g., node 1160) and a UE (e.g., UE 1110 or 1120) perform a method 1200 for relaxing RRM measurements. In step 1210 of Figure 12, the network node provides a UE with an indication (e.g., indication 1300) for use in determining a stationary-mobility state of the UE. Correspondingly in step 1220, the UE obtains the indication provided by the network node. In some embodiments, the indication provided by the network node includes one or more of criteria 1310-1360 as described above. The network node may, for example, provide all criteria 1310-1360 to the UE. The UE, based on knowledge of its capabilities and/or type, determines to use one or more of the criteria 1310-1360. In another embodiment, the network node may request the UE to provide its device capabilities and/or type before providing one or more of the criteria 1310-1360 to the UE.

In another embodiment, the network node may infer the UE's device capabilities and/or type before providing the UE with one or more of criteria 1310-1360 accordingly. For example, the network node (e.g., a gNB) may infer the UE's device capabilities and/or types based on data of the number of cell or beam reselections in the past, the UE's location data, the UE's model, the UE's registration or subscription information, or the like. The data for such an inference may be provided from a core network node (e.g., subscription information) and/or obtained based on monitoring of the UE data traffic and mobility patterns. If the network node inferred that a UE is a RedCap UE, it may select one or more criteria from criteria 1310-1360 and provide the selected criteria to the UE. In some embodiments, the network node may further provide the time parameter described above to the UE as an indication that the criteria for relaxing RRM measurement should be used.

In some embodiments, an indication comprising one or more criteria (e.g., criteria 1310-1360) can be provided from the network node to the UE during an initial attachment procedure (e.g., when the UE has selected the serving cell and is camped on the serving cell associated with the networking node). The UE can store the indication and can perform subsequent actions based on the stored indication for the duration of time it is attached to the network node.

In some embodiments, some network nodes may support the determination of UE's stationary-mobility state and the associated relaxed RRM measurement rules, and some network nodes may not. As a results, a network node may also provide to the UE an indication (e.g., in system information) of whether the network node supports the determination of UE's stationary-mobility state and the associated relaxed RRM measurement rules. If such an indication is also provided during the initial attachment procedure, the UE's stationary-mobility determination and associated relaxed RRM measurement rules can be supported in any RRC state (e.g., RRC_IDLE, RRC_INACTIVE, or RRC_CONNECTED). In some embodiments, such an indication can be provided on a per-UE and per-cell basis, for example, when the RRC connection is being established, when signaling between the UE and network node is being resumed; or when other dedicated RRC signaling between the UE and the network node (e.g., a gNB) is used. In these embodiments, the UE's stationary-mobility determination and associated relaxed RRM measurement rules can be supported in the RRC_INACTIVE or RRC_CONNECTED states, but not in the RRC_IDLE state. In some embodiments, such an indication can be provided to the UE in an RRC release message when a connection is being released or suspended. In these embodiments, the UE's stationary-mobility determination and associated measurement rules can be supported while the UE is in RRC_IDLE or RRC_INACTIVE states.

With reference still to Figure 12, in step 1240, the UE determines, based on the indication provided by the network node, whether a mobility state of the UE corresponds to the stationary-mobility state. For example, the UE can obtain signal values (e.g., the Srxlev, the $Srxlev_{Ref}$) associated with at least one of a serving cell, one or more beams of the serving cell, one or more neighboring cells, and one or more beams of the neighboring cells. Using the signal values obtained and one or more of criteria 1310-1360 described above, the UE can determine whether the mobility state of the UE corresponds to the stationary-mobility state.

In step 1260, in accordance with a determination that the mobility state of the UE corresponds to a stationary-mobility state, the UE adjusts one or more RRM measurements according to relaxed RRM measurement rules associated with the stationary-mobility state. Adjusting the RRM measurements comprises relaxing one or more time intervals used in performing the one or more measurements. For example, if the UE is in a stationary-mobility state, the RRM measurement can be relaxed such that a time interval between measurements is further extended (e.g., relaxed from performing RRM measurement every 3 DRX cycle to every 10 DRX cycles). A DRX cycle is a discontinuous reception cycle, which can be configured to a desired time period (e.g., 0.3 seconds, 1 second, 2 seconds, 10 seconds, etc.). By extending the time interval between RRM measurements, the adjustments reduce the amount of energy consumed when performing RRM measurements.

In some embodiments, the UE can use a stepwise relaxation configuration for adjusting the measurements. For example, if the UE determines that it is in a low-mobility state for a duration of a first timer parameter $T_{SearchDeltaP}$, the UE can apply the relaxed RRM measurement rules for a low-mobility state, which has an extended time interval for performing RRM measurements. If the UE further determines that it is in a stationary-mobility state for a duration of a second timer parameter $T_{SearchDeltaP\_stationary}$, the UE can apply the relaxed RRM measurement rules for a stationary-mobility state, which has a further extended time interval for performing RRM measurements (e.g., > 1 hour or > 3 DRX cycles). The stepwise relaxation configuration can be applied for a serving cell or a neighboring cell.

With reference still to Figure 12, in step 1280, the UE performs at least one RRM measurement based on the adjustments. For example, the UE performs the RRM measurements of the serving cell and/or the neighboring cells at the extended time intervals. The RRM measurements can be performed at the cell level or beam level. In some embodiments, the UE transmits a measurement report to the network node based on the RRM measurements performed. In step 1290, the network node receives the measurement report. Based on the measurement report, the network node can manage the network resources for an efficient use thereof. For example, based on the measurement report, the network node, alone or with other network nodes, can assign, reassign, and release radio resources to other UEs in a single or multi-cell environment. The results would be a more efficient allocation of network resources and more balanced network traffic with an efficient use of network bandwidth.

Additional Embodiments

In one embodiment, a method performed by a user equipment (UE) for relaxing Radio Resource Management (RRM) measurement is provided. The method comprises obtaining an indication for use in determining a stationary-mobility state of the UE. The indication comprises one or more first criteria, which is based on a difference between a current signal level value and a reference signal value as compared to an adjusted threshold. The method further comprises determining whether a mobility state of the UE corresponds to the stationary-mobility state based on the indication. The UE in the stationary-mobility state has a lower mobility than the UE in a low-mobility state. In accordance with a determination that the mobility state of the UE corresponds to a stationary-mobility state, the method further comprises adjusting one or more measurements according to measurement rules associated with the stationary-mobility state. The adjustments reduce the amount of energy consumed when performing RRM measurement. The method further comprises performing at least one RRM measurement based on the adjustments.

In one embodiment, a method performed by a network node for relaxing Radio Resource Management (RRM) measurements is provided. The method comprises providing a user equipment (UE) with an indication for use in determining a stationary-mobility state of the UE, the indication comprising one or more first criteria. The first criteria is based on a difference between a current signal level value and a reference signal value as compared to an adjusted threshold. The UE in a stationary-mobility state has a lower mobility than the UE in a low-mobility state. The method further comprises receiving a measurement report based on adjusted measurements according to one or more measurement rules associated with the stationary-mobility state.

In one embodiment, a method performed by a wireless communication system is provided. The system comprises a network node and a user equipment (UE). The user equipment is served by a serving cell of the network node. The method comprises providing, from the network node to the UE, an indication for use in determining a stationary-mobility state of the UE. The indication comprises one or more first criteria, wherein the first criteria is based on a difference between a current signal level value and a reference signal value as compared to an adjusted threshold. The method further comprises determining, by the UE based on the indication, whether a mobility state of the UE corresponds to the stationary-mobility state. The UE in the stationary-mobility state has a lower mobility than the UE in a low-mobility state. In accordance with a determination that the mobility state of the UE corresponds to a stationary-mobility state, the method further comprises adjusting one or more measurements by the UE according to measurement rules associated with the stationary-mobility state. The adjustments reduce the amount of energy consumed when performing RRM measurement. The method further comprises performing at least one RRM measurement by the UE based on the adjustments and receiving, by the network node, a measurement report based on adjusted measurements according to one or more measurement rules associated with the stationary-mobility state.

In one embodiment, the current signal level value is represented by Srxlev, and the reference signal value is represented by SrxlevRef. The first criteria is expressed by one or more of:

(SrxlevRef - Srxlev) < (SSearchDeltaP - Smin_factor),
(SrxlevRef - Srxlev) < (SSearchDeltaP / Smin_factor),
(SrxlevRef - Srxlev) < | (SSearchDeltaP - Smin_factor) |, and/or
(SrxlevRef - Srxlev) < | (SSearchDeltaP / Smin_factor) |, where Srxlev denotes a cell selection RX level value of a serving cell of the UE, SrxlevRef denotes a reference cell selection received signal level value of a serving cell of the UE, SSearchDeltaP denotes a threshold of variation of the cell selection received signal level value, and Smin_factor denotes a minimization factor based on a mobility state of the UE.

In one embodiment, the indication further comprises one or more second criteria. The second criteria are based on a measured received signal level value (Qrxlevmeas) of a neighboring cell, a reference signal received power (RSRP) of a neighboring cell, a threshold of variation of the measured received level value, and a second minimization factor.

In one embodiment, the indication further comprises one or more third criteria. The third criteria are based on signals received by a rotary antenna of the UE from one or more beams of one or more neighboring cells.

In one embodiment, the first criteria are further based on a relaxation factor based on at least one of capabilities or a device type of the UE.

In one embodiment, the indication comprises one or more fourth criteria. The fourth criteria are based on a cell selection RX level value (Srxlev), a plurality of reference cell selection received signal level values (SrxlevRef_1...SrxlevRef_N), a threshold of variation of the cell selection received signal level value (SSearchDeltaP), and a minimization factor corresponding to the mobility state of the UE (Smin_factor).

In one embodiment, each of the plurality of reference cell selection received signal level values (SrxlevRef_1...SrxlevRef_N) corresponds to a different rotation of a rotary antenna of the UE. One or more of the fourth criteria are expressed by comparing the cell selection RX level value (Srxlev) with a corresponding one of the plurality of reference cell selection received signal level values (SrxlevRef_1...SrxlevRef_N).

In one embodiment, the indication comprises one or more fifth criteria. The fifth criteria are based on a first number of cell reselections (NCR_STATIONARY) to be used in determining whether the mobility state of the UE corresponds to the stationary-mobility state.

In one embodiment, the first number of cell reselections (NCR_STATIONARY) is associated with its own timer.

In one embodiment, the indication comprises one or more sixth criteria. The sixth criteria are based on a cell selection RX level value (Srxlev) of a serving cell, a reference cell selection received signal level value (SrxlevRef) of the serving cell, a first threshold of variation of the cell selection received signal level value (SSearchDeltaP_x), and a second threshold of variation of the cell selection received signal level value (SSearchDeltaP_y). The first threshold of variation of the cell selection received signal level value and the second threshold of variation of the cell selection received signal level value correspond to one or more of different device types and capabilities.

In one embodiment, determining whether the mobility state of the UE corresponds to the stationary-state comprises obtaining signal values associated with at least one of a serving cell, one or more beams of the serving cell, one or more neighboring cells, and one or more beams of the neighboring cells; and determining whether the mobility state of the UE corresponds to the stationary-mobility state based on the indication and the obtained signal values.

In one embodiment, the method for relaxing Radio Resource Management (RRM) measurement further comprises obtaining a timer parameter indicating an amount of time associated with a stationary-mobility state of the UE.

In one embodiment, adjusting one or more measurements according to measurement rules associated with the stationary-mobility state comprises relaxing one or more time periods used in performing one or more of serving cell measurements and neighboring cell measurements.

In one embodiment, the indication is provided based on at least one of inferred device capabilities and a device type of the UE.

The foregoing specification is to be understood as being in every respect illustrative and exemplary, but not restrictive, and the scope of the invention disclosed herein is not to be determined from the specification, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope of the appended claims.

## ABBREVIATIONS

| 3GPP | 3rd Generation Partnership Project |
| 5G | 5th Generation |
| CA | Carrier Aggregation |
| CC | Carrier Component |
| CCCH SDU | Common Control Channel SDU |
| CDMA | Code Division Multiplexing Access |
| CIR | Channel Impulse Response |
| CMTC | Critical Machine Type Communication |
| CP | Cyclic Prefix |
| DL | Downlink |
| DM | Demodulation |
| DRX | Discontinuous Reception |
| DTX | Discontinuous Transmission |
| eMBB | Enhanced Mobile Broadband |
| eNB | E-UTRAN NodeB |

| | |
|---|---|
| E-SMLC | evolved Serving Mobile Location Center |
| E-UTRA | Evolved UTRA |
| E-UTRAN | Evolved UTRAN |
| gNB | Base station in NR |
| GSM | Global System for Mobile communication |
| HO | Handover |
| IoT | Internet of Things |
| LOS | Line of Sight |
| LPP | LTE Positioning Protocol |
| LTE | Long-Term Evolution |
| MAC | Medium Access Control |
| MBB | Mobile Broadband |
| MBMS | Multimedia Broadcast Multicast Services |
| MBSFN | Multimedia Broadcast multicast service Single Frequency Network |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| MTC | Machine-Type Communication |
| NR | New Radio |
| NG-RAN | Next Generation Radio Access Network |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| P-CCPCH | Primary Common Control Physical Channel |
| PCell | Primary Cell |
| PCFICH | Physical Control Format Indicator Channel |
| PDCP | Packet Data Convergence Protocol |
| PDP | Profile Delay Profile |
| PDSCH | Physical Downlink Shared Channel |
| PGW | Packet Gateway |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RedCap | Reduced Capability |
| RLC | Radio Link Control |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |

| | |
|---|---|
| RSTD | Reference Signal Time Difference |
| SCH | Synchronization Channel |
| SCell | Secondary Cell |
| SDAP | Service Data Adaptation Protocol |
| SDU | Service Data Unit |
| SFN | System Frame Number |
| SGW | Serving Gateway |
| SI | System Information |
| SIB | System Information Block |
| SNR | Signal to Noise Ratio |
| SON | Self Optimized Network |
| SS | Synchronization Signal |
| SSS | Secondary Synchronization Signal |
| TDD | Time Division Duplex |
| TDOA | Time Difference of Arrival |
| TOA | Time of Arrival |
| TS | Technical Specification |
| TSS | Tertiary Synchronization Signal |
| TTI | Transmission Time Interval |
| UE | User Equipment |
| UL | Uplink |
| UMTS | Universal Mobile Telecommunication System |
| URLLC | Ultra-Reliable Low-Latency Communication |
| USIM | Universal Subscriber Identity Module |
| UTDOA | Uplink Time Difference of Arrival |
| UTRA | Universal Terrestrial Radio Access |
| UTRAN | Universal Terrestrial Radio Access Network |
| WCDMA | Wide CDMA |
| WLAN | Wide Local Area Network |

**Claims**

1.  A method performed by a user equipment, UE (110, 200, 491, 492, 530, 1010, 1430), for relaxing Radio Resource Management, RRM, measurement, the method comprising:

    obtaining (1220), from a network node (160, 520, 1160), an indication (1300) for use in determining a stationary-mobility state of the UE (110, 200, 491, 492, 530, 1010, 1430), the indication (1300) comprising one or more first criteria (1310), wherein the first criteria (1310) is based on a difference between a current signal level value and a reference signal value as compared to an adjusted threshold, whereby the adjusted threshold is $S_{SearchDeltaP}$ adjusted according to a minimization factor $S_{min\_factor}$ based on a mobility state of the UE (110, 200, 491, 492, 530, 1010, 1430);
    determining (1240), based on the indication (1300), whether a mobility state of the UE (110, 200, 491, 492, 530, 1010, 1430) corresponds to the stationary-mobility state, wherein the UE (110, 200, 491, 492, 530, 1010, 1430) in the stationary-mobility state has a lower mobility than the UE (110, 200, 491, 492, 530, 1010, 1430) in a low-mobility state;
    in accordance with a determination that the mobility state of the UE (110, 200, 491, 492, 530, 1010, 1430) corresponds to a stationary-mobility state, adjusting (1260) one or more measurements according to measurement rules associated with the stationary-mobility state, the adjustments reducing the amount of energy consumed when performing RRM measurement;
    performing (1280) at least one RRM measurement based on the adjustments; and
    transmitting a measurement report to the network node (160, 520, 1160) based on the at least one RRM measurement performed.

2.  The method of claim 1, wherein the current signal level value is represented by Srxlev, and the reference signal value is represented by SrxlevRef, the first criteria (1310) being expressed by one or more of:

$$(SrxlevRef - Srxlev) < (S_{SearchDeltaP} - S_{min\_factor}),$$

$$(SrxlevRef - Srxlev) < (S_{SearchDeltaP} / S_{min\_factor}),$$

$$(SrxlevRef - Srxlev) < | (S_{SearchDeltaP} - S_{min\_factor}) |,$$

and/or

$(SrxlevRef - Srxlev) < | (S_{SearchDeltaP} / S_{min\_factor}) |$, wherein Srxlev denotes a cell selection RX level value of a serving cell of the UE (110, 200, 491, 492, 530, 1010, 1430), SrxlevRef denotes a reference cell selection received signal level value of a serving cell of the UE (110, 200, 491, 492, 530, 1010, 1430), $S_{SearchDeltaP}$ denotes a threshold of variation of the cell selection received signal level value, and $S_{min\_factor}$ denotes a minimization factor based on a mobility state of the UE (110, 200, 491, 492, 530, 1010, 1430); and/or

wherein the indication (1300) further comprises one or more second criteria (1320), the second criteria (1320) being based on a measured received signal level value ($Q_{rxlevmeas}$) of a neighboring cell, a reference signal received power, RSRP, of a neighboring cell, a threshold of variation of the measured received level value, and a second minimization factor; and/or

wherein the indication (1300) further comprises one or more third criteria (1330), the third criteria (1330) being based on signals received by a rotary antenna of the UE (110, 200, 491, 492, 530, 1010, 1430) from one or more beams of one or more neighboring cells; and/or

wherein the first criteria (1310) are further based on a relaxation factor based on at least one of capabilities or a device type of the UE (110, 200, 491, 492, 530, 1010, 1430).

3.  The method of claim 1, wherein the indication (1300) comprises one or more fourth criteria (1340), the fourth criteria (1340) being based on a cell selection RX level value (Srxlev), a plurality of reference cell selection received signal level values ($Srxlev_{Ref\_1}...Srxlev_{Ref\_N}$), a threshold of variation of the cell selection received signal level value ($S_{SearchDeltaP}$), and a minimization factor ($S_{min\_factor}$) corresponding to the mobility state of the UE (110, 200, 491, 492, 530, 1010, 1430); and optionally

    wherein each of the plurality of reference cell selection received signal level values ($Srxlev_{Ref\_1}... Srxlev_{Ref\_N}$) corresponds to a different rotation of a rotary antenna of the UE (110, 200, 491, 492, 530, 1010, 1430), and wherein one or more of the fourth criteria (1340) are expressed by comparing the cell selection RX level value (Srxlev) with a corresponding one of the plurality of reference cell selection received signal level values ($Srxlev_{Ref\_1}...Srxlev_{Ref\_N}$).

4.  The method of any of claims 1-3, wherein the indication (1300) comprises one or more fifth criteria (1350), the fifth criteria (1350) being based on a first number of cell reselections ($N_{CR\_STATIONARY}$) to be used in determining (1240) whether the mobility state of the UE (110, 200, 491, 492, 530, 1010, 1430) corresponds to the stationary-mobility state; and optionally

    wherein the first number of cell reselections ($N_{CR\_STATIONARY}$) is associated with its own timer.

5.  The method of any of claims 1-4, wherein the indication (1300) comprises one or more sixth criteria (1360), the sixth criteria (1360) being based on a cell selection RX level value (Srxlev) of a serving cell, a reference cell selection received signal level value (SrxlevRef) of the serving cell, a first threshold of variation of the cell selection received signal level value (SSearchDeltaP _x), and a second threshold of variation of the cell selection received signal level value (SSearchDeltaP_y), the first threshold of variation of the cell selection received signal level value and the second threshold of variation of the cell selection received signal level value corresponding to one or more of different device types and capabilities; and/or

    wherein determining (1240) whether the mobility state of the UE (110, 200, 491, 492, 530, 1010, 1430) corresponds to the stationary-state comprises:

    obtaining signal values associated with at least one of a serving cell, one or more beams of the serving cell, one or more neighboring cells, and one or more beams of the neighboring cells; and

    determining (1240) whether the mobility state of the UE (110, 200, 491, 492, 530, 1010, 1430) corresponds to the stationary-mobility state based on the indication (1300) and the obtained signal values; and/or

    further comprising obtaining a timer parameter indicating an amount of time associated with a stationary-mobility state of the UE (110, 200, 491, 492, 530, 1010, 1430); and/or wherein adjusting (1260) one or more measurements according to measurement rules associated with the stationary-mobility state comprises:

    relaxing one or more time periods used in performing one or more of serving cell measurements and neighboring cell measurements; and/or
wherein the indication (1300) is provided based on at least one of inferred device capabilities and a device type of the UE (110, 200, 491, 492, 530, 1010, 1430).

6. A method performed by a network node (160, 520, 1160) for relaxing Radio Resource Management, RRM, measurements, the method comprising:

provided a user equipment, UE (110, 200, 491, 492, 530, 1010, 1430), with an indication (1300) for use in determining a stationary-mobility state of the UE, the indication (1300) comprising one or more first criteria (1310),

wherein the first criteria (1310) is based on a difference between a current signal level value and a reference signal value as compared to an adjusted threshold, whereby the adjusted threshold is $S_{SearchDeltaP}$ adjusted according to a minimization factor $S_{min\_factor}$ based on a mobility state of the UE;
wherein the UE in a stationary-mobility state has a lower mobility than the UE in a low-mobility state; and

receiving (1290) an RRM measurement report from the UE based on adjusted measurements according to one or more measurement rules associated with the stationary-mobility state.

7. The method of claim 6, wherein the method is comprising a feature or step corresponding to any one of the claims 2 to 5.

8. A user equipment, UE (110, 200, 491, 492, 530, 1010, 1430), for relaxing Radio Resource Management, RRM, measurements, comprising:
a transceiver (122), a processor (201), and a memory (215), said memory (215) containing instructions executable by the processor (201) whereby the UE is operative to:

obtain, from a network node (160, 520, 1160), an indication (1300) for use in determining a stationary-mobility state of the UE, the indication (1300) comprising one or more first criteria (1310), wherein the first criteria (1310) is based on a difference between a current signal level value and a reference signal value as compared to an adjusted threshold, whereby the adjusted threshold is $S_{SearchDeltaP}$ adjusted according to a minimization factor $S_{min\_factor}$ based on a mobility state of the UE;
determine, based on the indication (1300), whether a mobility state of the UE (110, 200, 491, 492, 530, 1010, 1430) corresponds to the stationary-mobility state, wherein the UE (110, 200, 491, 492, 530, 1010, 1430) in the stationary-mobility state has a lower mobility than the UE (110, 200, 491, 492, 530, 1010, 1430) in a low-mobility state;
in accordance with a determination that the mobility state of the UE (110, 200, 491, 492, 530, 1010, 1430) corresponds to a stationary-mobility state, adjust one or more measurements according to measurement rules associated with the stationary-mobility state, the adjustments reducing the amount of energy consumed when performing RRM measurement;
perform (1280) at least one RRM measurement based on the adjustments; and
transmitting a measurement report to the network node (160, 520, 1160) based on the at least one RRM measurement performed.

9. The UE (110, 200, 491, 492, 530, 1010, 1430) of claim 8, wherein the UE (110, 200, 491, 492, 530, 1010, 1430) is further limited by a feature according to any one of the claims 2 to 5.

10. A network node (160, 520, 1160) for relaxing Radio Resource Management, RRM, measurements, comprising:
a transceiver (172), a processor (187) and a memory (180), said memory (180) containing instructions executable by said processor (172), whereby said apparatus is operative to:

provide a user equipment, UE, (110, 200, 491, 492, 530, 1010, 1430) with an indication (1300) for use in determining a stationary-mobility state of the UE, the indication (1300) comprising one or more first criteria (1310),

wherein the first criteria (1310) is based on a difference between a current signal level value and a reference signal value as compared to an adjusted threshold, whereby the adjusted threshold is $S_{SearchDeltaP}$ adjusted according to a minimization factor $S_{min\_factor}$ based on a mobility state of the UE;
wherein the UE (110, 200, 491, 492, 530, 1010, 1430) in a stationary-mobility state has a lower mobility than the UE (110, 200, 491, 492, 530, 1010, 1430) in a low-mobility state; and

receive an RRM measurement report from the UE (110, 200, 491, 492, 530, 1010, 1430) based on adjusted measurements according to one or more measurement rules associated with the stationary-mobility state.

11. The network node (160, 520, 1160) of claim 10, wherein the network node (160, 520, 1160) is further limited by a feature corresponding to any one of the claims 2 to 5.

12. A method performed by a wireless communication system, the system comprising a network node (160, 520, 1160) and a user equipment, UE, the user equipment being served by a serving cell of the network node (160, 520, 1160), the method comprising:

providing, from the network node (160, 520, 1160) to the UE, an indication (1300) for use in determining a stationary-mobility state of the UE, the indication (1300) comprising one or more first criteria (1310), wherein the first criteria (1310) is based on a difference between a current signal level value and a reference signal value as compared to an adjusted threshold; whereby the adjusted threshold is $S_{SearchDeltaP}$ adjusted according to a minimization factor $S_{min\_factor}$ based on a mobility state of the UE;
determining (1240), by the UE based on the indication (1300), whether a mobility state of the UE corresponds to the stationary-mobility state, wherein the UE in the stationary-mobility state has a lower mobility than the UE in a low-mobility state;
in accordance with a determination that the mobility state of the UE corresponds to a stationary-mobility state, adjusting (1260) one or more measurements by the UE according to measurement rules associated with the stationary-mobility state, the adjustments reducing the amount of energy consumed when performing RRM measurement;
performing (1280) at least one RRM measurement by the UE based on the adjustments; transmitting a measurement report to the network node (160, 520, 1160) based on the at least one RRM measurement performed; and
receiving (1290), by the network node (160, 520, 1160), an RRM measurement report from the UE based on adjusted measurements according to one or more measurement rules associated with the stationary-mobility state.

13. The method of claim 12, wherein the method is further comprises a step or feature according to any one of the claims 2 to 5.

14. A wireless communication system comprising:

a network node (160, 520, 1160) comprising a transceiver (172), a processor (172), and a memory (180), said memory (180) containing instructions executable by said processor (172) whereby said network node (160, 520, 1160) is operative to:
provide an UE (110, 200, 491, 492, 530, 1010, 1430) with an indication (1300) for use in determining a stationary-mobility state of the UE (110, 200, 491, 492, 530, 1010, 1430), the indication (1300) comprising one or more first criteria (1310), wherein the first criteria (1310) is based on a difference between a current signal level value and a reference signal value as compared to an adjusted threshold, whereby the adjusted threshold is $S_{SearchDeltaP}$ adjusted according to a minimization factor $S_{min\_factor}$ based on a mobility state of the UE (110, 200, 491, 492, 530, 1010, 1430); and
the user equipment, UE, (110, 200, 491, 492, 530, 1010, 1430) comprising a transceiver (122), a processor (201), and a memory (215), said memory (215) containing instructions executable by said processor (201) whereby said UE (110, 200, 491, 492, 530, 1010, 1430) is operative to:

determine, by the UE (110, 200, 491, 492, 530, 1010, 1430) based on the indication (1300), whether a mobility state of the UE (110, 200, 491, 492, 530, 1010, 1430) corresponds to the stationary-mobility state, wherein the UE (110, 200, 491, 492, 530, 1010, 1430) in the stationary-mobility state has a lower mobility than the UE (110, 200, 491, 492, 530, 1010, 1430) in a low-mobility state;
in accordance with a determination that the mobility state of the UE (110, 200, 491, 492, 530, 1010, 1430) corresponds to a stationary-mobility state, adjust one or more measurements by the UE (110, 200, 491, 492, 530, 1010, 1430) according to measurement rules associated with the stationary-mobility state, the adjustments reducing the amount of energy consumed when performing RRM measurement;
perform (1280) at least one RRM measurement by the UE (110, 200, 491, 492, 530, 1010, 1430) based on the adjustments;
transmitting a measurement report to the network node (160, 520, 1160) based on the at least one RRM

28

measurement performed;

wherein the network node (160, 520, 1160) is further operative to receiving (1290) an RRM measurement report from the UE (110, 200, 491, 492, 530, 1010, 1430) based on adjusted measurements according to one or more measurement rules associated with the stationary-mobility state.

15. The system of claim 14, wherein the wireless communication system is further operative to perform the steps of any one of claims 2 to 5.

**Patentansprüche**

1. Verfahren, das von einer Benutzereinrichtung, UE, (110, 200, 491, 492, 530, 1010, 1430) durchgeführt wird, zur Relaxation von Funkressourcenverwaltungsmessungen, RRM-Messungen, wobei das Verfahren Folgendes umfasst:

Erhalten (1220) einer Anzeige (1300) zur Verwendung beim Bestimmen eines stationären Mobilitätszustands der UE (110, 200, 491, 492, 530, 1010, 1430) von einem Netzwerkknoten (160, 520, 1160), wobei die Anzeige (1300) ein oder mehrere erste Kriterien (1310) umfasst, wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst ist, der auf dem Mobilitätszustand der UE (110, 200, 491, 492, 530, 1010, 1430) basiert;
Bestimmen (1240) basierend auf der Anzeige (1300), ob ein Mobilitätszustand der UE (110, 200, 491, 492, 530, 1010, 1430) dem stationären Mobilitätszustand entspricht, wobei die UE (110, 200, 491, 492, 530, 1010, 1430) im stationären Mobilitätszustand eine geringere Mobilität aufweist als die UE (110, 200, 491, 492, 530, 1010, 1430) in einem Zustand geringer Mobilität;
Anpassen (1260) gemäß einer Bestimmung, dass der Mobilitätszustand der UE (110, 200, 491, 492, 530, 1010, 1430) einem stationären Mobilitätszustand entspricht, einer oder mehrerer Messungen gemäß Messregeln, die mit dem stationären Mobilitätszustand assoziiert sind, wobei die Anpassungen die Energiemenge verringern, die beim Durchführen einer RRM-Messung verbraucht wird;
Durchführen (1280) mindestens einer RRM-Messung basierend auf den Anpassungen; und
Senden eines Messberichts an den Netzwerkknoten (160, 520, 1160) basierend auf der durchgeführten mindestens einen RRM-Messung.

2. Verfahren nach Anspruch 1, wobei der aktuelle Signalpegelwert durch Srxlev dargestellt wird und der Referenzsignalwert durch SrxlevRef dargestellt wird, wobei die erste Kriterien (1310) durch eines oder mehrere von Folgenden ausgedrückt werden:

$$(SrxlevRef - Srxlev) < (S_{SearchDeltaP} - S_{min\_factor}),$$

$$(SrxlevRef - Srxlev) < (S_{SearchDeltaP} / S_{min\_factor}),$$

$$(SrxlevRef - Srxlev) < | (S_{SearchDeltaP} - S_{min\_factor}) |,$$

und/oder

$$(SrxlevRef - Srxlev) < | (S_{SearchDeltaP} / S_{min\_factor}) |,$$

wobei Srxlev einen Zellenauswahl-RX-Pegelwert einer bedienenden Zelle der UE (110, 200, 491, 492, 530, 1010, 1430) bezeichnet, SrxlevRef einen Referenzzellenauswahl-Empfangssignalpegelwert der UE (110, 200, 491, 492, 530, 1010, 1430) bezeichnet, $S_{SearchDeltaP}$ einen Änderungsschwellenwert des Zellenauswahl-Empfangssignalpegelwerts bezeichnet und $S_{min\_factor}$ einen Minimierungsfaktor bezeichnet, der auf einem Mobilitätszustand der UE (110, 200, 491, 492, 530, 1010, 1430) basiert; und/oder
wobei die Anzeige (1300) ferner ein oder mehrere zweite Kriterien (1320) umfasst, wobei die zweiten Kriterien (1320) auf einem gemessenen Empfangssignalpegelwert ($Q_{rxlevmeas}$) einer Nachbarzelle, einer Referenzsignalempfangsleistung, RSRP, einer Nachbarzelle, einem Änderungsschwellenwert des gemessenen Empfangspegelwerts und einem zweiten Minimierungsfaktor basieren; und/oder

wobei die Anzeige (1300) ferner ein oder mehrere dritte Kriterien (1330) umfasst, wobei die dritten Kriterien (1330) auf Signalen basieren, die von einer Drehantenne der UE (110, 200, 491, 492, 530, 1010, 1430) aus einem oder mehreren Strahlen einer oder mehrerer Nachbarzellen empfangen werden; und/oder

wobei die ersten Kriterien (1310) ferner auf einem Relaxationsfaktor basieren, der auf mindestens einem von Fähigkeiten oder einem Vorrichtungstyp der UE (110, 200, 491, 492, 530, 1010, 1430) basiert.

3. Verfahren nach Anspruch 1, wobei die Anzeige (1300) ein oder mehrere vierte Kriterien (1340) umfasst, wobei die vierten Kriterien (1340) auf einem Zellenauswahl-RX-Pegelwert ($S_{rxlev}$), einer Mehrzahl von Referenzzellenauswahl-Empfangssignalpegelwerten ($S_{rxlev_{Ref\_1}}$ ... $S_{rxlev_{Ref\_N}}$), einem Änderungsschwellenwert des Zellenauswahl-Empfangssignalpegelwerts ($S_{SearchDeltaP}$) und einem Minimierungsfaktor ($S_{min\_factor}$) basieren, der dem Mobilitätszustand der UE (110, 200, 491, 492, 530, 1010, 1430) entspricht; und optional

wobei jeder der Mehrzahl von Referenzzellenauswahl-Empfangssignalpegelwerten ($S_{rxlev_{Ref\_1}}$ ... $S_{rxlev_{Ref\_N}}$) einer unterschiedlichen Drehung einer Drehantenne der UE (110, 200, 491, 492, 530, 1010, 1430) entspricht, und wobei eines oder mehrere der vierten Kriterien (1340) durch Vergleichen des Zellenauswahl-RX-Pegelwerts ($S_{rxlev}$) mit einem entsprechenden der Mehrzahl von Referenzzellenauswahl-Empfangssignalpegelwerten ($S_{rxlev_{Ref\_1}}$ ... $S_{rxlev_{Ref\_N}}$) ausgedrückt werden.

4. Verfahren nach einem der Ansprüche 1 bis 3, wobei die Anzeige (1300) ein oder mehrere fünfte Kriterien (1350) umfasst, wobei die fünften Kriterien (1350) auf einer ersten Anzahl von Zellenneuauswahlen ($N_{CR\_STATIONARY}$) basieren, die beim Bestimmen (1240) dessen verwendet werden sollen, ob der Mobilitätszustand der UE (110, 200, 491, 492, 530, 1010, 1430) dem stationären Mobilitätszustand entspricht; und optional

wobei die erste Anzahl von Zellenneuauswahlen ($N_{CR\_STATIONARY}$) mit ihrem eigenen Zeitgeber assoziiert ist.

5. Verfahren nach einem der Ansprüche 1 bis 4, wobei die Anzeige (1300) ein oder mehrere sechste Kriterien (1360) umfasst, wobei die sechsten Kriterien (1360) auf einem Zellenauswahl-RX-Pegelwert ($S_{rxlev}$) einer bedienenden Zelle, einem Referenzzellenauswahl-Empfangssignalpegelwert ($S_{rxlevRef}$) der bedienenden Zelle, einem ersten Änderungsschwellenwert des Zellenauswahl-Empfangssignalpegelwerts ($S_{SearchDeltaP\_x}$) und einem zweiten Änderungsschwellenwert des Zellenauswahl-Empfangssignalpegelwerts ($S_{SearchDeltaP\_y}$) basieren, wobei der erste Änderungsschwellenwert des Zellenauswahl-Empfangssignalpegelwerts und der zweite Änderungsschwellenwert des Zellenauswahl-Empfangssignalpegelwerts einem oder mehreren von verschiedenen Vorrichtungstypen und Fähigkeiten entsprechen; und/oder

wobei das Bestimmen (1240), ob der Mobilitätszustand der UE (110, 200, 491, 492, 530, 1010, 1430) dem stationären Mobilitätszustand entspricht, Folgendes umfasst:

Erhalten von Signalwerten, die mit mindestens einem von einer bedienenden Zelle, einem oder mehreren Strahlen der bedienenden Zelle, einer oder mehreren Nachbarzellen und einem oder mehreren Strahlen der Nachbarzellen assoziiert sind; und

Bestimmen (1240), ob der Mobilitätszustand der UE (110, 200, 491, 492, 530, 1010, 1430) dem stationären Mobilitätszustand entspricht, basierend auf der Anzeige (1300) und den erhaltenen Signalwerten; und/oder

ferner umfassend Erhalten eines Zeitgeberparameters, der eine Zeitdauer anzeigt, die mit einem stationären Mobilitätszustand der UE (110, 200, 491, 492, 530, 1010, 1430) assoziiert ist; und/oder

wobei das Anpassen (1260) einer oder mehrerer Messungen gemäß Messregeln, die dem stationären Mobilitätszustand assoziiert sind, Folgendes umfasst:

Relaxieren eines oder mehrerer Zeiträume, die beim Durchführen eines oder mehrerer von Messungen von bedienenden Zellen und Messungen von Nachbarzellen verwendet werden; und/oder

wobei die Anzeige (1300) basierend auf mindestens einem von abgeleiteten Vorrichtungsfähigkeiten oder einem Vorrichtungstyp der UE (110, 200, 491, 492, 530, 1010, 1430) bereitgestellt wird.

6. Verfahren, das von einem Netzwerkknoten (160, 520, 1160) durchgeführt wird, zur Relaxation von Funkressourcenverwaltungsmessungen, RRM-Messungen, wobei das Verfahren Folgendes umfasst:

Bereitstellen für eine Benutzereinrichtung, UE, (110, 200, 491, 492, 530, 1010, 1430) einer Anzeige (1300) zur Verwendung beim Bestimmen eines stationären Mobilitätszustands der UE, wobei die Anzeige (1300) ein oder mehrere erste Kriterien (1310) umfasst,

wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst ist, der auf dem Mobilitätszustand der UE basiert;

wobei die UE in einem stationären Mobilitätszustand eine geringere Mobilität aufweist als die UE in einem Zustand geringer Mobilität; und

Empfangen (1290) eines RRM-Messberichts von der UE basierend auf angepassten Messungen gemäß einer oder mehreren Messregeln, die mit dem stationären Mobilitätszustand assoziiert sind.

7. Verfahren nach Anspruch 6, wobei das Verfahren ein Merkmal oder einen Schritt umfasst, das/der einem der Ansprüche 2 bis 5 entspricht.

8. Benutzereinrichtung, UE, (110, 200, 491, 492, 530, 1010, 1430) zum Relaxieren von Funkressourcenverwaltungsmessungen, RRM-Messungen, umfassend:

einen Sendeempfänger (122), einen Prozessor (201) und einen Speicher (215), wobei der Speicher (215) Anweisungen enthält, die vom Prozessor (201) ausgeführt werden können, wodurch die UE ausgelegt ist zum:

Erhalten einer Anzeige (1300) zur Verwendung beim Bestimmen eines stationären Mobilitätszustands der UE von einem Netzwerkknoten (160, 520, 1160), wobei die Anzeige (1300) ein oder mehrere erste Kriterien (1310) umfasst, wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst ist, der auf dem Mobilitätszustand der UE basiert;

Bestimmen basierend auf der Anzeige (1300), ob ein Mobilitätszustand der UE (110, 200, 491, 492, 530, 1010, 1430) dem stationären Mobilitätszustand entspricht, wobei die UE (110, 200, 491, 492, 530, 1010, 1430) im stationären Mobilitätszustand eine geringere Mobilität aufweist als die UE (110, 200, 491, 492, 530, 1010, 1430) in einem Zustand geringer Mobilität;

Anpassen gemäß einer Bestimmung, dass der Mobilitätszustand der UE (110, 200, 491, 492, 530, 1010, 1430) einem stationären Mobilitätszustand entspricht, einer oder mehrerer Messungen gemäß Messregeln, die mit dem stationären Mobilitätszustand assoziiert sind, wobei die Anpassungen die Energiemenge verringern, die beim Durchführen einer RRM-Messung verbraucht wird;

Durchführen (1280) mindestens einer RRM-Messung basierend auf den Anpassungen; und

Senden eines Messberichts an den Netzwerkknoten (160, 520, 1160) basierend auf der durchgeführten mindestens einen RRM-Messung.

9. UE (110, 200, 491, 492, 530, 1010, 1430) nach Anspruch 8, wobei die UE (110, 200, 491, 492, 530, 1010, 1430) ferner durch ein Merkmal nach einem der Ansprüche 2 bis 5 eingeschränkt ist.

10. Netzwerkknoten (160, 520, 1160) zum Relaxieren von Funkressourcenverwaltungsmessungen, RRM-Messungen, umfassend:
einen Sendeempfänger (172), einen Prozessor (187) und einen Speicher (180), wobei der Speicher (180) Anweisungen enthält, die vom Prozessor (172) ausgeführt werden können, wodurch das Gerät ausgelegt ist zum:

Bereitstellen für eine Benutzereinrichtung, UE, (110, 200, 491, 492, 530, 1010, 1430) einer Anzeige (1300) zur Verwendung beim Bestimmen eines stationären Mobilitätszustands der UE, wobei die Anzeige (1300) ein oder mehrere erste Kriterien (1310) umfasst,

wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst wird, der auf dem Mobilitätszustand der UE basiert;

wobei die UE (110, 200, 491, 492, 530, 1010, 1430) in einem stationären Mobilitätszustand eine geringere Mobilität aufweist als die UE (110, 200, 491, 492, 530, 1010, 1430) in einem Zustand geringer Mobilität; und

Empfangen eines RRM-Messberichts von der UE (110, 200, 491, 492, 530, 1010, 1430) basierend auf angepassten Messungen gemäß einer oder mehreren Messregeln, die mit dem stationären Mobilitätszustand assoziiert sind.

11. Netzwerkknoten (160, 520, 1160) nach Anspruch 10, wobei der Netzwerkknoten (160, 520, 1160) ferner durch ein Merkmal eingeschränkt ist, das einem der Ansprüche 2 bis 5 entspricht.

12. Verfahren, das von einem Drahtloskommunikationssystem durchgeführt wird, wobei das System einen Netzwerkknoten (160, 520, 1160) und eine Benutzereinrichtung, UE, umfasst, wobei die Benutzereinrichtung von einer bedienenden Zelle des Netzwerkknotens (160, 520, 1160) bedient wird und das Verfahren Folgendes umfasst:

Bereitstellen einer Anzeige (1300) zur Verwendung beim Bestimmen eines stationären Mobilitätszustands der UE von einem Netzwerkknoten (160, 520, 1160) für die UE, wobei die Anzeige (1300) ein oder mehrere erste Kriterien (1310) umfasst, wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst ist, der auf dem Mobilitätszustand der UE basiert;
Bestimmen (1240) durch die UE basierend auf der Anzeige (1300), ob ein Mobilitätszustand der UE dem stationären Mobilitätszustand entspricht, wobei die UE im stationären Mobilitätszustand eine geringere Mobilität aufweist als die UE in einem Zustand geringer Mobilität;
Anpassen (1260) gemäß einer Bestimmung, dass der Mobilitätszustand der UE einem stationären Mobilitätszustand entspricht, einer oder mehrerer Messungen durch die UE gemäß Messregeln, die mit dem stationären Mobilitätszustand assoziiert sind, wobei die Anpassungen die Energiemenge verringern, die beim Durchführen einer RRM-Messung verbraucht wird;
Durchführen (1280) mindestens einer RRM-Messung durch die UE basierend auf den Anpassungen; und
Senden eines Messberichts an den Netzwerkknoten (160, 520, 1160) basierend auf der durchgeführten mindestens einen RRM-Messung; und
Empfangen (1290) eines RRM-Messberichts durch den Netzwerkknoten (160, 520, 1160) von der UE basierend auf angepassten Messungen gemäß einer oder mehreren Messregeln, die mit dem stationären Mobilitätszustand assoziiert sind.

13. Verfahren nach Anspruch 12, wobei das Verfahren ferner einen Schritt oder ein Merkmal nach einem der Ansprüche 2 bis 5 umfasst.

14. Drahtloses Kommunikationssystem, umfassend:
einen Netzwerkknoten (160, 520, 1160), umfassend einen Sendeempfänger (172), einen Prozessor (172) und einen Speicher (180), wobei der Speicher (180) Anweisungen enthält, die vom Prozessor (172) ausgeführt werden können, wodurch der Netzwerkknoten (160, 520, 1160) ausgelegt ist zum:

Bereitstellen für eine UE (110, 200, 491, 492, 530, 1010, 1430) einer Anzeige (1300) zur Verwendung beim Bestimmen eines stationären Mobilitätszustands der UE (110, 200, 491, 492, 530, 1010, 1430), wobei die Anzeige (1300) ein oder mehrere erste Kriterien (1310) umfasst, wobei die ersten Kriterien (1310) auf einer Differenz zwischen einem aktuellen Signalpegelwert und einem Referenzsignalwert im Vergleich zu einem angepassten Schwellenwert basieren, wobei der angepasste Schwellenwert $S_{SearchDeltaP}$ ist, der gemäß einem Minimierungsfaktor $S_{min\_factor}$ angepasst ist, der auf dem Mobilitätszustand der UE (110, 200, 491, 492, 530, 1010, 1430) basiert; und
eine Benutzereinrichtung, UE, (110, 200, 491, 492, 530, 1010, 1430), umfassend einen Sendeempfänger (122), einen Prozessor (201) und einen Speicher (215), wobei der Speicher (215) Anweisungen enthält, die vom Prozessor (201) ausgeführt werden können, wodurch die UE (110, 200, 491, 492, 530, 1010, 1430) ausgelegt ist zum:

Bestimmen durch die UE (110, 200, 491, 492, 530, 1010, 1430) basierend auf der Anzeige (1300), ob ein Mobilitätszustand der UE (110, 200, 491, 492, 530, 1010, 1430) dem stationären Mobilitätszustand entspricht, wobei die UE (110, 200, 491, 492, 530, 1010, 1430) im stationären Mobilitätszustand eine geringere Mobilität aufweist als die UE (110, 200, 491, 492, 530, 1010, 1430) in einem Zustand geringer Mobilität;
Anpassen gemäß einer Bestimmung, dass der Mobilitätszustand der UE (110, 200, 491, 492, 530, 1010, 1430) einem stationären Mobilitätszustand entspricht, durch die UE (110, 200, 491, 492, 530, 1010, 1430) einer oder mehrerer Messungen gemäß Messregeln, die mit dem stationären Mobilitätszustand assoziiert sind, wobei die Anpassungen die Energiemenge verringern, die beim Durchführen einer RRM-Messung verbraucht wird;
Durchführen (1280) mindestens einer RRM-Messung durch die UE (110, 200, 491, 492, 530, 1010, 1430) basierend auf den Anpassungen;

Senden eines Messberichts an den Netzwerkknoten (160, 520, 1160) basierend auf der durchgeführten mindestens einen RRM-Messung;

wobei der Netzwerkknoten (160, 520, 1160) ferner dazu ausgelegt ist, einen RRM-Messbericht von der UE (110, 200, 491, 492, 530, 1010, 1430) basierend auf angepassten Messungen gemäß einer oder mehreren Messregeln zu empfangen (1290), die mit dem stationären Mobilitätszustand assoziiert sind.

15. System nach Anspruch 14, wobei das Drahtloskommunikationssystem ferner zum Ausführen der Schritte nach einem der Ansprüche 2 bis 5 ausgelegt ist.

**Revendications**

1. Procédé réalisé par un équipement utilisateur, UE (110, 200, 491, 492, 530, 1010, 1430), pour assouplir une mesure de gestion de ressources radio, le procédé comprenant :

l'obtention (1220), à partir d'un nœud de réseau (160, 520, 1160), d'une indication (1300) destinée à être utilisée dans la détermination d'un état de mobilité stationnaire de l'UE (110, 200, 491, 492, 530, 1010, 1430), l'indication (1300) comprenant un ou plusieurs premiers critères (1310), dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE (110, 200, 491, 492, 530, 1010, 1430) ;

la détermination (1240), sur la base de l'indication (1300), si un état de mobilité de l'UE (110, 200, 491, 492, 530, 1010, 1430) correspond ou non à l'état de mobilité stationnaire, dans lequel l'UE (110, 200, 491, 492, 530, 1010, 1430) dans l'état de mobilité stationnaire présente une mobilité inférieure à celle de l'UE (110, 200, 491, 492, 530, 1010, 1430) dans un état de faible mobilité ;

selon une détermination que l'état de mobilité de l'UE (110, 200, 491, 492, 530, 1010, 1430) correspond à un état de mobilité stationnaire, l'ajustement (1260) d'une ou plusieurs mesures selon des règles de mesure associées à l'état de mobilité stationnaire, les ajustements réduisant la quantité d'énergie consommée lors de la réalisation d'une mesure de RRM ;

la réalisation (1280) d'au moins une mesure de RRM sur la base des ajustements ; et

la transmission d'un rapport de mesure au nœud de réseau (160, 520, 1160) sur la base de l'au moins une mesure de RRM réalisée.

2. Procédé selon la revendication 1, dans lequel la valeur du niveau de signal courant est représentée par Srxlev, et la valeur de signal de référence est représentée par SrxlevRef, les premiers critères (1310) étant exprimés par un ou plusieurs parmi :

$$(SrxlevRef - Srxlev) < (S_{SearchDeltaP} - S_{min\_factor}),$$

$$(SrxlevRef - Srxlev) < (S_{SearchDeltaP} / S_{min\_factor}),$$

$$(SrxlevRef - Srxlev) < |(S_{SearchDeltaP} - S_{min\_factor})|,$$

et/ou

$$(SrxlevRef - Srxlev) < |(S_{SearchDeltaP} / S_{min\_factor})|,$$

dans lequel Srxlev représente une valeur de niveau RX de sélection de cellule d'une cellule de desserte de l'UE (110, 200, 491, 492, 530, 1010, 1430), SrxlevRef représente une valeur de niveau de signal reçu de sélection de cellule de référence d'une cellule de desserte de l'UE (110, 200, 491, 492, 530, 1010, 1430), $S_{SarchDeltaP}$ représente un seuil de variation de la valeur de niveau de signal reçu de sélection de cellule, et $S_{min\_factor}$ représente un facteur de minimisation basé sur un état de mobilité de l'UE (110, 200, 491, 492, 530, 1010, 1430) ; et/ou

dans lequel l'indication (1300) comprend en outre un ou plusieurs deuxièmes critères (1320), les deuxièmes critères (1320) étant basés sur une valeur de niveau de signal reçu mesurée ($Q_{rxlevmeas}$) d'une cellule voisine, une puissance reçue de signal de référence, RSRP, d'une cellule voisine, un seuil de variation de la valeur de niveau de signal reçu mesurée, et un deuxième facteur de minimisation ; et/ou

dans lequel l'indication (1300) comprend en outre un ou plusieurs troisièmes critères (1330), les troisièmes critères (1330) étant basés sur des signaux reçus par une antenne rotative de l'UE (110, 200, 491, 492, 530, 1010, 1430) émanant d'un ou plusieurs faisceaux d'une ou plusieurs cellules voisines ; et/ou

dans lequel les premiers critères (1310) sont en outre basés sur un facteur d'assouplissement basé sur au moins l'une de capacités ou un type de dispositif de l'UE (110, 200, 491, 492, 530, 1010, 1430).

3. Procédé selon la revendication 1, dans lequel l'indication (1300) comprend un ou plusieurs quatrièmes critères (1340), les quatrièmes critères (1340) étant basés sur une valeur de niveau RX de sélection de cellule (Srxlev), une pluralité de valeurs de niveau de signal reçu de sélection de cellule de référence ($Srxlev_{Ref\_1} ... Srxlev_{Ref\_N}$), un seuil de variation de la valeur de niveau de signal reçu de sélection de cellule ($S_{SearchDeltaP}$), et un facteur de minimisation ($S_{min\_factor}$) correspondant à l'état de mobilité de l'UE (110, 200, 491, 492, 530, 1010, 1430) ; et facultativement dans lequel chacune de la pluralité de valeurs de niveau de signal reçu de sélection de cellule de référence ($Srxlev_{Ref\_1} ... Srxlev_{Ref\_N}$) correspond à une rotation différente d'une antenne rotative de l'UE (110, 200, 491, 492, 530, 1010, 1430), et dans lequel un ou plusieurs des quatrièmes critères (1340) sont exprimés par la comparaison de la valeur de niveau RX de sélection de cellule (Srxlev) à l'une correspondante de la pluralité de valeurs de niveau de signal reçu de sélection de cellule de référence ($Srxlev_{Ref\_1} ... Srxlev_{Ref\_N}$).

4. Procédé selon l'une quelconque des revendications 1 à 3, dans lequel l'indication (1300) comprend un ou plusieurs cinquièmes critères (1350), les cinquièmes critères (1350) étant basés sur un premier nombre de resélections de cellule ($N_{CR\_STATIONARY}$) à utiliser dans la détermination (1240) si l'état de mobilité de l'UE (110, 200, 491, 492, 530, 1010, 1430) correspond ou non à l'état de mobilité stationnaire ; et facultativement dans lequel le premier nombre de resélections de cellule ($N_{CR\_STATIONARY}$) est associé à sa propre minuterie.

5. Procédé selon l'une quelconque des revendications 1 à 4, dans lequel l'indication (1300) comprend un ou plusieurs sixièmes critères (1360), les sixièmes critères (1360) étant basés sur une valeur de niveau RX de sélection de cellule (Srxlev) d'une cellule de desserte, une valeur de niveau de signal reçu de sélection de cellule de référence (SrxlevRef) de la cellule de desserte, un premier seuil de variation de la valeur de niveau de signal reçu de sélection de cellule (SSearchDeltaP_x), et un deuxième seuil de variation de la valeur de niveau de signal reçu de sélection de cellule (SSearchDeltaP_y), le premier seuil de variation de la valeur de niveau de signal reçu de sélection de cellule et le deuxième seuil de variation de la valeur de niveau de signal reçu de sélection de cellule correspondant à un ou plusieurs de différents types et capacités de dispositif ; et/ou

dans lequel la détermination (1240) si l'état de mobilité de l'UE (110, 200, 491, 492, 530, 1010, 1430) correspond ou non à l'état stationnaire comprend :

l'obtention de valeurs de signal associées à au moins l'un d'une cellule de desserte, d'un ou plusieurs faisceaux de la cellule de desserte, d'une ou plusieurs cellules voisines, et d'un ou plusieurs faisceaux des cellules voisines ; et

la détermination (1240) si l'état de mobilité de l'UE (110, 200, 491, 492, 530, 1010, 1430) correspond ou non à l'état de mobilité stationnaire sur la base de l'indication (1300) et des valeurs de signal obtenues ; et/ou comprenant en outre l'obtention d'un paramètre de minuterie indiquant une quantité de temps associée à un état de mobilité stationnaire de l'UE (110, 200, 491, 492, 530, 1010, 1430) ; et/ou

dans lequel l'ajustement (1260) d'une ou plusieurs mesures selon des règles de mesure associées à l'état de mobilité stationnaire comprend :

l'assouplissement d'une ou plusieurs périodes de temps utilisées dans la réalisation d'une ou plusieurs de mesures de cellule de desserte et de mesures de cellule voisine ; et/ou

dans lequel l'indication (1300) est fournie sur la base d'au moins l'une de capacités de dispositif déduites et d'un type de dispositif de l'UE (110, 200, 491, 492, 530, 1010, 1430).

6. Procédé réalisé par un nœud de réseau (160, 520, 1160) pour assouplir des mesures de gestion de ressources radio, RRM, le procédé comprenant :

la fourniture, à un équipement utilisateur, UE (110, 200, 491, 492, 530, 1010, 1430), d'une indication (1300) destinée à être utilisée dans la détermination d'un état de mobilité stationnaire de l'UE, l'indication (1300) comprenant un ou plusieurs premiers critères (1310),

dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE ;

dans lequel l'UE dans un état de mobilité stationnaire présente une mobilité inférieure à celle de l'UE dans un état de faible mobilité ; et

la réception (1290) d'un rapport de mesure de RRM depuis l'UE sur la base de mesures ajustées selon une ou plusieurs règles de mesure associées à l'état de mobilité stationnaire.

7. Procédé selon la revendication 6, dans lequel le procédé comprend une caractéristique ou une étape correspondant à l'une quelconque des revendications 2 à 5.

8. Equipement utilisateur, UE (110, 200, 491, 492, 530, 1010, 1430), pour assouplir des mesures de gestion de ressources radio, RRM, comprenant :
un émetteur-récepteur (122), un processeur (201) et une mémoire (215), ladite mémoire (215) contenant des instructions exécutables par le processeur (201) selon lesquelles l'UE est fonctionnel pour :

obtenir, à partir d'un nœud de réseau (160, 520, 1160), une indication (1300) destinée à être utilisée dans la détermination d'un état de mobilité stationnaire de l'UE, l'indication (1300) comprenant un ou plusieurs premiers critères (1310), dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE ;

déterminer, sur la base de l'indication (1300), si un état de mobilité de l'UE (110, 200, 491, 492, 530, 1010, 1430) correspond ou non à l'état de mobilité stationnaire, dans lequel l'UE (110, 200, 491, 492, 530, 1010, 1430) dans l'état de mobilité stationnaire présente une mobilité inférieure à celle de l'UE (110, 200, 491, 492, 530, 1010, 1430) dans un état de faible mobilité ;

selon une détermination que l'état de mobilité de l'UE (110, 200, 491, 492, 530, 1010, 1430) correspond à un état de mobilité stationnaire, ajuster une ou plusieurs mesures selon des règles de mesure associées à l'état de mobilité stationnaire, les ajustements réduisant la quantité d'énergie consommée lors de la réalisation d'une mesure de RRM ;

réaliser (1280) au moins une mesure de RRM sur la base des ajustements ; et

transmettre un rapport de mesure au nœud de réseau (160, 520, 1160) sur la base de l'au moins une mesure de RRM réalisée.

9. UE (110, 200, 491, 492, 530, 1010, 1430) selon la revendication 8, dans lequel l'UE (110, 200, 491, 492, 530, 1010, 1430) est en outre limité par une caractéristique selon l'une quelconque des revendications 2 à 5.

10. Nœud de réseau (160, 520, 1160) pour assouplir des mesures de gestion de ressources radio, RRM, comprenant :
un émetteur-récepteur (172), un processeur (187) et une mémoire (180), ladite mémoire (180) contenant des instructions exécutables par ledit processeur (172) selon lesquelles ledit appareil est fonctionnel pour :

fournir, à un équipement utilisateur, UE (110, 200, 491, 492, 530, 1010, 1430), une indication (1300) destinée à être utilisée dans la détermination d'un état de mobilité stationnaire de l'UE, l'indication (1300) comprenant un ou plusieurs premiers critères (1310),

dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE ;

dans lequel l'UE (110, 200, 491, 492, 530, 1010, 1430) dans un état de mobilité stationnaire présente une mobilité inférieure à celle de l'UE (110, 200, 491, 492, 530, 1010, 1430) dans un état de faible mobilité ; et

recevoir un rapport de mesure de RRM depuis l'UE (110, 200, 491, 492, 530, 1010, 1430) sur la base de mesures ajustées selon une ou plusieurs règles de mesure associées à l'état de mobilité stationnaire.

11. Nœud de réseau (160, 520, 1160) selon la revendication 10, dans lequel le nœud de réseau (160, 520, 1160) est en outre limité par une caractéristique correspondant à l'une quelconque des revendications 2 à 5.

12. Procédé réalisé par un système de communication sans fil, le système comprenant un nœud de réseau (160, 520, 1160) et un équipement utilisateur, UE, l'équipement utilisateur étant desservi par une cellule de desserte du nœud de réseau (160, 520, 1160), le procédé comprenant :

la fourniture, du nœud de réseau (160, 520, 1160) à l'UE, d'une indication (1300) destinée à être utilisée dans la détermination d'un état de mobilité stationnaire de l'UE, l'indication (1300) comprenant un ou plusieurs premiers critères (1310), dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE ;

la détermination (1240), par l'UE sur la base de l'indication (1300), si un état de mobilité de l'UE correspond ou non à l'état de mobilité stationnaire, dans lequel l'UE dans l'état de mobilité stationnaire présente une mobilité inférieure à celle de l'UE dans un état de faible mobilité ;

selon une détermination que l'état de mobilité de l'UE correspond à un état de mobilité stationnaire, l'ajustement (1260) d'une ou plusieurs mesures par l'UE selon des règles de mesure associées à l'état de mobilité stationnaire, les ajustements réduisant la quantité d'énergie consommée lors de la réalisation d'une mesure de RRM ;

la réalisation (1280) d'au moins une mesure de RRM par l'UE sur la base des ajustements ;

la transmission d'un rapport de mesure au nœud de réseau (160, 520, 1160) sur la base de l'au moins une mesure de RRM réalisée ; et

la réception (1290), par le nœud de réseau (160, 520, 1160), d'un rapport de mesure de RRM depuis l'UE sur la base de mesures ajustées selon une ou plusieurs règles de mesure associées à l'état de mobilité stationnaire.

**13.** Procédé selon la revendication 12, dans lequel le procédé comprend en outre une étape ou une caractéristique selon l'une quelconque des revendications 2 à 5.

**14.** Système de communication sans fil comprenant :

un nœud de réseau (160, 520, 1160) comprenant un émetteur-récepteur (172), un processeur (172) et une mémoire (180), ladite mémoire (180) contenant des instructions exécutables par ledit processeur (172) selon lesquelles le nœud de réseau (160, 520, 1160) est fonctionnel pour :

fournir, à un UE (110, 200, 491, 492, 530, 1010, 1430), une indication (1300) destinée à être utilisée dans la détermination d'un état de mobilité stationnaire de l'UE (110, 200, 491, 492, 530, 1010, 1430), l'indication (1300) comprenant un ou plusieurs premiers critères (1310), dans lequel les premiers critères (1310) sont basés sur une différence entre une valeur de niveau de signal courante et une valeur de signal de référence comparée à un seuil ajusté, le seuil ajusté est $S_{SearchDeltaP}$ ajusté selon un facteur de minimisation $S_{min\_factor}$ sur la base d'un état de mobilité de l'UE (110, 200, 491, 492, 530, 1010, 1430) ; et

l'équipement utilisateur, UE (110, 200, 491, 492, 530, 1010, 1430), comprenant un émetteur-récepteur (122), un processeur (201) et une mémoire (215), ladite mémoire (215) contenant des instructions exécutables par ledit processeur (201) selon lesquelles ledit UE (110, 200, 491, 492, 530, 1010, 1430) est fonctionnel pour :

déterminer, par l'UE (110, 200, 491, 492, 530, 1010, 1430) sur la base de l'indication (1300), si un état de mobilité de l'UE (110, 200, 491, 492, 530, 1010, 1430) correspond ou non à l'état de mobilité stationnaire, dans lequel l'UE (110, 200, 491, 492, 530, 1010, 1430) dans l'état de mobilité stationnaire présente une mobilité inférieure à celle de l'UE (110, 200, 491, 492, 530, 1010, 1430) dans un état de faible mobilité ;

selon une détermination que l'état de mobilité de l'UE (110, 200, 491, 492, 530, 1010, 1430) correspond à un état de mobilité stationnaire, ajuster une ou plusieurs mesures par l'UE (110, 200, 491, 492, 530, 1010, 1430) selon des règles de mesure associées à l'état de mobilité stationnaire, les ajustements réduisant la quantité d'énergie consommée lors de la réalisation d'une mesure de RRM ;

réaliser (1280) au moins une mesure de RRM par l'UE (110, 200, 491, 492, 530, 1010, 1430) sur la base des ajustements ;

transmettre un rapport de mesure au nœud de réseau (160, 520, 1160) sur la base de l'au moins une mesure de RRM réalisée ;

dans lequel le nœud de réseau (160, 520, 1160) est en outre fonctionnel pour recevoir (1290) un rapport de mesure de RRM depuis l'UE (110, 200, 491, 492, 530, 1010, 1430) sur la base de mesures ajustées selon une ou plusieurs règles de mesure associées à l'état de mobilité stationnaire.

**15.** Système selon la revendication 14, dans lequel le système de communication sans fil est en outre fonctionnel pour réaliser les étapes selon l'une quelconque des revendications 2 à 5.

Figure 1

110b Wireless Device

160b Network Node

106 Network

110c Wireless Device

170 Wireless Signal

162 Antenna(s)

**110 Wireless Device**

111 Antenna(s)

114 Interface

112 Radio Front End Circuitry

118 Filter(S)

116 Amplifier(S)

137 Power Circuitry

122 RF Tranceiver Circuitry

126 Application Processing Circuitry

124 Baseband Circuitry

120 Processing Circuitry

130 Device Readable Medium

132 User Interface Equipment

134 Auxiliary Equipment

136 Power Source

**160 Network Node**

192 Radio Front End Circuitry

198 Filter(s)

196 Amplifier(s)

194 Port(s)/Terminal(s)

190 Interface

187 Power Circuitry

172 RF Tranceiver Circuitry

174 Baseband Circuitry

170 Processing Circuitry

180 Device Readable Medium

184 Auxiliary Equipment

186 Power Source

EP 4 233 354 B1

37

Figure 2

- 243b Network
- 243a Network

200

| 201 Processor | 205 Input/Output Interface | 209 RF Interface | 211 Network Connection Interface | 213 Power Source |

202 Bus

215 Memory

217 RAM

221 Storage Medium
- 223 Operating System
- 225 Application Programs
- 227 Data

219 ROM

231 Communication Subsystem

233 Transmitter

235 Receiver

EP 4 233 354 B1

Figure 3

300

EP 4 233 354 B1

FIG. 4

40

FIG. 5

EP 4 233 354 B1

BEGIN

610
Host computer
provides user
data

611
Host computer
executes host
application

620
Host computer
initiates
transmission
carrying the
user data to the
UE

FIG. 6

630
Base station
transmits the
user data

640
UE executes
client
application

END

42

BEGIN

710
Host computer provides user data

720
Host computer initiates transmission carrying the user data to the UE

730
UE receives the user data

END

**FIG. 7**

BEGIN

810
UE receives input data provided at host computer

811
UE executes client application

820
UE provides user data

821
UE executes client application

830
UE initiates transmission of the user data to the host computer

FIG. 8

840
Host computer receives user data transmitted from the UE

END

BEGIN

910
Base station
receives user
data from UE

920
Base station
initiates
transmission of
user data to the
host computer

FIG. 9

930
Host computer
receives the
user data

END

**Figure 10**

**1010a UE**
-VR headset
-Sensor
-Actuator
-Monitoring Device
-Vehicle
-Controller/driver

1070a

**1060a gNB**

**Network 1006**

1071

1070b

**1060b gNB**

**1015a Remote Device**
-Sensors
-Actuators
-VR headset

**1010b Hub**
-Controller
-Router
-Content source
-Analytics

**1015b Remote Device**
-Sensors
-Actuators
-VR headset

**1009 Server**
-Live content
-pre-recorded content
- Analytics

EP 4 233 354 B1

1160
Network Node

**1110 UE**
-(e.g., an UE for EMBB, CMTC, URLLC services)

**1120 UE**
-(e.g., an UE having a stationary-state, an Reduced Capability UE)

**Figure 11**

Figure 12

Indications 1300

First Criteria (based on signal values of a serving cell) 1310

Relaxation Factor 1312

Second Criteria (based on signal values of a neighboring cell) 1320

Third Criteria (based on signals received by a rotatory antenna of the UE) 1330

Fourth Criteria (based on a plurality of reference cell selection receiver level values) 1340

Fifth Criteria (based on $N_{CR\_STATIONARY}$, Timer) 1350

Sixth Criteria (based on two different threshold of variation corresponding to different device types/ capabilities 1360

**Figure 13**

**Figure 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019254110 A1
- WO 2020018347 A1
- WO 2020089513 A1
- WO 2020164903 A1